# EUROPÄISCHE PATENTSCHRIFT

(11) **EP 1 266 159 B1**
(45) Veröffentlichungstag und Bekanntmachung des Hinweises auf die Patenterteilung: **01.12.2004**
(21) Anmeldenummer: 01933705.4
(22) Anmeldetag: 15.03.2001
(51) Int. Cl.: F16K 1/44

(54) **SITZREINIGUNGSFÄHIGES ASEPTISCHES DOPPELDICHTVENTIL MIT LECKKONTROLLE**
ASEPTICAL LEAKAGE-CONTROLLED DOUBLE-SEALING VALVE WITH SEAT CLEANING FUNCTION
SOUPAPE D'ETANCHEIFICATION DOUBLE ASEPTIQUE AVEC NETTOYAGE DU SIEGE ET CONTROLE DE FUITE

(30) Priorität: 21.03.2000 DE 10013885
(43) Veröffentlichungstag der Anmeldung: 18.12.2002
(73) Patentinhaber: TUCHENHAGEN GmbH, 21514 Büchen (DE)
(72) Erfinder: WIEDENMANN, Willi, 73469 Riesbürg (DE); SAUER, Martin, 86687 Kaisheim (DE); SCHMID, Werner, 89522 Heidenheim (DE); WENGERT, Holger, 73441 Bopfingen (DE)
(86) Internationale Anmeldenummer: PCT/EP2001/002944
(87) Internationale Veröffentlichungsnummer: WO 2001/071228

(56) Entgegenhaltungen:
- EP-A- 0 279 177
- EP-A- 0 928 915
- DE-A- 3 516 128
- GB-A- 1 321 149
- US-A- 4 655 253

## Beschreibung

### TECHNISCHES GEBIET

Sitzreinigungsfähiges aseptisches Doppeldichtventil mit Leckkontrolle, mit einem translatorisch verschiebbaren Schließglied, das eine ein erstes mit einem zweiten Gehäuseteil eines Ventilgehäuses miteinander verbindende Verbindungsöffnung steuert, mit einem Antrieb, der eine Hauptverstelleinrichtung für einen Vollhub (Offenstellung) und zwei Einzelverstelleinrichtungen für Teilhübe (Teiloffenstellungen) des Schließgliedes aufweist, mit dem Schließglied, das umfangsseitig, in der Verschieberichtung gesehen, jeweils mit ventilgehäuseseitig korrespondierenden, die Verbindungsöffnung berandenden zylindrischen Begrenzungsflächen zwei axial beabstandete Abdichtungsstellen bildet, die jeweils mit einer in radialer Richtung wirksamen Sitzdichtung ausgestattet sind, mit einer im Bereich zwischen den Abdichtungsstellen vorgesehenen Ausnehmung, die diesen Bereich ringförmig umfaßt und einen Leckagehohlraum bildet, der über wenigstens einen ventilgehäuseseitig ausgeführten, steuerbaren Verbindungsweg mit der Umgebung des Doppeldichtventils verbunden ist, und mit einem Balg, der eine Durchführung einer das Schließglied mit dem Antrieb verbindenden Stange im Bereich dieser Durchführung spaltfrei überbrückt.

### STAND DER TECHNIK

Der Prototyp eines doppeltdichtenden Ventils (im folgenden Doppeldichtventil genannt - im Unterschied zu einem sog. Doppelsitzventil, bei dem zwei relativ zueinander bewegliche, jeweils eine Abdichtungsstelle aufweisende Schließglieder vorgesehen sind) ist aus der DE 35 16 128 C2 bekannt. Bei diesem Ventil sind die beiden als Radialdichtungen ausgebildeten Sitzdichtungen auf einem zylinderförmigen Ventilkörper im Abstand voneinander in waagrechten Ebenen angeordnet, so daß in Schließstellung von den Ventilsitzen und der sich zwischen ihnen erstreckenden Ventilgehäusewand sowie der Ventilkörperwand zwischen den Sitzdichtungen eine ringförmige Kammer gebildet ist. Diese ringförmige Kammer ist Bestandteil einer Leckkontrolleinrichtung, wobei die Kammer über eine erste mittels eines Ventils steuerbare Leitung mit der Atmosphäre verbunden (Leckageabfluß) und über eine zweite und gleichfalls mit einem Ventil steuerbare Leitung mit Reinigungsflüssigkeit beaufschlagbar ist. Dem bekannten Doppeldichtventil fehlt ein ausgeprägter, mit einem Volumen ausgestatteter Leckagehohlraum zwischen den Abdichtungsstellen, so daß die ggf. an den Sitzdichtungen auftretenden Leckagen nicht hinreichend sicher drucklos abzuführen sind. Darüber hinaus ist das bekannte Doppeldichtventil nicht sitzreinigungsfähig. Eine derartige Sitzreinigung durch Teiloffenstellung des Ventils, und zwar vorzugsweise eine Reinigung der einen Abdichtungsstelle unabhängig von der anderen, ist vielfach erwünscht, insbesondere dann, wenn in einem der beiden Gehäuseteile Produkt ansteht und somit ein Öffnen des Ventils und eine Reinigung der Verbindungsöffnung zwischen den Gehäuseteilen und der dort angeordneten Sitzflächen im Durchfluß nicht möglich sind.

Darüber hinaus ist bei dem bekannten Doppeldichtventil der Ventilkörper mit ungeschmälertem Querschnitt als Stange durch das zugeordnete Ventilgehäuse zum Antrieb hindurchgeführt, wodurch einerseits eine kritische Stangendichtung relativ großen Umfangs und andererseits durch die Relativbewegung zwischen Stange und zugeordneter Stangendichtung über den sog. "Fahrstuhleffekt" Verschleppungs- und Kontaminationsgefahr zwischen einem Produkt im Ventilgehäuse und der Umgebung des Ventils, und zwar in beiden Richtungen, besteht. Eine derartige Ausführung entspricht in keiner Weise den Forderungen, wie sie heute an eine aseptische Ventilausgestaltung gestellt werden müssen.

Ein weiteres bekanntes Doppeldichtventil, welches sowohl sitzreinigungsfähig ist als auch hinsichtlich der Stangendurchführung durch das Ventilgehäuse aseptischen Ansprüchen gerecht wird (Anordnung eines die Stangendurchführung überbrückenden Balges), ist aus der **EP 0 279 177,** insbesondere Figuren 59 und 60, in Verbindung mit den dortigen Ansprüchen 43 bis 46 bekannt. Im Gegensatz zum Doppeldichtventil gemäß **DE 35 16 128 C2** besitzt dieses bekannte Doppeldichtventil einen ausgeprägten, umlaufenden, mit einem Volumen ausgestatteten Leckagehohlraum. Die Verbindung dieses Leckagehohlraumes mit der Umgebung des Ventils wird nicht über extern angeordnete Ventile gesteuert, wie dies beim Doppeldichtventil gemäß **DE 3516 128 C2** der Fall ist, sondern über einen im Ventilgehäuse angeordneten ringförmigen Verschlußteil, welcher zu dem Schließglied relativ beweglich in Richtung dessen Bewegungsfreiheitsgrad angeordnet ist.

Ein anderes Doppeldichtventil, welches über einen zwischen den Abdichtungsstellen ausgebildeten, ausgeprägten Leckagehohlraum verfügt, das bezüglich beider Abdichtungsstellen sitzreinigungsfähig ist und das hinsichtlich seiner Stangendurchführungen durch das Ventilgehäuse aseptischen Anforderungen genügt, wenn diese Durchführungen mit einem als Faltenbalg oder Wellrohr ausgebildeten Balg überbrückt werden, ist aus der **EP 0 928 915 A2** bekannt.

Sämtliche vorstehend erwähnten Doppeldichtventile verfügen über ein allen diesen Ventilen gemeinsames Merkmal, welches darin besteht, daß in der Offenstellung des Doppeldichtventils das translatorisch verschiebbare Schließglied mit seinen beiden axial beabstandeten Abdichtungsstellen in das für die jeweilige Offenstellung in Frage kommende Gehäuseteil verschoben wird. Demzufolge ist der Öffnungshub des Doppeldichtventils derart ausgestaltet, daß in der Offenstellung wenigstens der axiale Abstand zwischen den Abdichtungsstellen zuzüglich eines den notwendigen Durchtrittsquerschnitt zwischen Ventilgehäuse und Schließglied sicherstellenden weiteren Teilhubes überbrückt wird. Der diesen Durchtrittsquerschnitt realisierende Teilhub ist durch den Durchtrittsquerschnitt im Sitzbereich determiniert und kann demzufolge nicht unter ein entsprechendes notwendiges Mindestmaß reduziert werden. Um den gesamten Öffnungshub nicht unnötig groß werden zu lassen, wird daher in der Regel der axiale Abstand der Abdichtungsstellen auf ein mögliches Minimum reduziert. Eine derartige Maßnahme läuft allerdings einer großzügigen und die Leckagesicherheit befördernden Auslegung des Leckagehohlraumes und seiner Verbindung(en) mit der Umgebung zuwider, da die drucklose Abführung der Leckage einen möglichst großen Ableitungsquerschnitt der Verbindung(en) zur Umgebung und damit einen möglichst großen Abstand der Abdichtungsstellen voneinander erfordert. Dieser Zielkonflikt ist mit den bisher bekannt gewordenen Doppeldichtventilen nicht befriedigend lösbar.

Sowohl beim Doppeldichtventil gemäß **EP 0 279 177** als auch bei jenem gemäß **EP 0 928 915** sind die Teilhubbewegungen des Schließgliedes gegenläufig und auseinanderstrebend gerichtet. Dies bedeutet, wie beispielsweise ein Blick auf die Figuren 59 und 60 **(EP 0 279 177)** oder die Figuren 4a und 4b **(EP 0 928 915 A2)** zeigt, daß in der Sitzreinigungsstellung des Schließgliedes die Reinigungsmittelmenge nur dadurch zu begrenzen ist, daß der im Sitzbereich freigelegte Ringspalt in dem erforderlichen Maße eng bemessen wird. Eine derartige Begrenzung ist jedoch, wie sich gezeigt hat, im Zusammenhang mit der sich durch die Freilegung der Sitzfläche ausdehnenden Dichtung sehr schwer möglich. Aus diesem Grunde wurde bereits vorgeschlagen und auch vielfach vorgesehen, den dichtungsfreien Endbereich des Schließgliedes so weit zu verlängern und in die an sich freigelegte Sitzfläche hineinreichen zu lassen, daß der zwischen Sitzfläche und Schließglied gebildete Ringspalt als Drosselringspalt wirkt. Im Falle der vorstehend genannten bekannten Doppeldichtventile mit den jeweils nach außen gerichteten Teilhüben bedeutet dies, daß das Schließglied zwischen freigelegter Sitzdichtung und Sitzfläche so weit axial zu verlängern ist, daß es in seiner Teiloffenstellung mit einem im Verhältnis zum Sitzdurchmesser hinreichend groß bemessenen Durchmesser in den Sitzbereich hineinragt und dort den notwendigen Drosselspalt bildet. Dies führt wiederum zu einer axialen Einengung des ventilgehäuseseitig vorzusehenden Leckagehohlraumes und seiner angeschlossenen Verbindungswege mit der Umgebung.

Darüber hinaus ist weder aus der **EP 0 279 177 A1** noch aus der **EP 0 928 915 A1** bekannt, wie der Antrieb für die Realisierung der Öffnungs- und Schließbewegung sowie für die Teilhubbewegungen dieser Doppeldichtventile realisiert werden kann.

Es ist Aufgabe der vorliegenden Erfindung, bei einem Doppeldichtventil der gattungsgemäßen Art den Sitzbereich und die Hubverhältnisse derart auszugestalten, daß die Verwendung eines möglichst einfachen Antriebs, eine größtmögliche Vermischungssicherheit durch das Doppeldichtventil und mit größter Zuverlässigkeit eine Begrenzung der Reinigungsmittelmenge gegeben sind.

### ZUSAMMENFASSUNG DER ERFINDUNG

Diese Aufgabe wird durch ein Doppeldichtventil mit den Merkmalen des Anspruchs 1 gelöst. Vorteilhafte Ausgestaltungen des Doppeldichtventils gemäß der Erfindung sind Gegenstand der Unteransprüche.

Durch die Ausbildung einer zwischen zylindrischen Begrenzungsflächen der Verbindungsöffnung ringförmig umlaufenden zweite Ausnehmung, insbesondere durch die relativ große Erstreckung in Hubrichtung zwischen diesen zylindrischen Begrenzungsflächen, und in Verbindung mit dem aus zwei ausgeprägten Verschlußteilen bestehenden einstückigen Schließglied ist es möglich, das Doppeldichtventil mit gegenüber bekannten Doppeldichtventilen reduziertem Hub in die volle Offenstellung zu überführen. Dabei wird, im Gegensatz zu allen Doppeldichtventilen nach dem Stand der Technik, nur ein Verschlußteil des Schließgliedes in den in Frage kommende Gehäuseteil hineingefahren, während der andere Verschlußteil zwischen den zylindrischen Begrenzungsflächen der Verbindungsöffnung verbleibt. Dadurch ist bei minimiertem Öffnungshub eine sehr großzügige Bemessung des Leckagehohlraumes möglich, da der durch den Abstand der Abdichtungsstellen des Schließgliedes an sich determinierte Leckagehohlraum beim Öffnungshub nicht mehr in voller Länge durch die axiale Öffnungsbewegung des Schließgliedes überbrückt werden muß. In der Offenstellung des Doppeldichtventils ist das Schließglied derart um den Vollhub verschoben, daß eine der beiden zylindrischen Begrenzungsflächen mit der ersten Ausnehmung im Schließglied und, abhängig davon, einer der beiden Verschlußteile mit der zweiten Ausnehmung im Ventilgehäuse jeweils den erforderlichen Durchtrittsquerschnitt des Doppeldichtventils begrenzen.

Eine vorteilhafte Ausgestaltung des vorgeschlagenen Doppeldichtventils sieht vor, daß der Antrieb, bezogen auf die Einbaulage des Doppeldichtventils, oberhalb des Ventilgehäuses angeordnet und daß das Schließglied in seiner Offenstellung zum Antrieb hin verschoben ist. Eine derartige Anordnung spart Bauhöhe gegenüber einer durch den allgemeinen Erfindungsgedanken ebenfalls abgedeckten Lösung, bei der das Schließglied in seiner Offenstellung vom Antrieb weg verschoben ist.

Mit Blick auf die Sitzreinigung der beiden Verschlußteile bietet die erfindungsgemäße Schließglied- und Sitzbereichausgestaltung zwei Möglichkeiten an. Zum einen sind die aus dem Stand der Technik bekannten gegenläufigen, voneinander wegweisenden Teilhubbewegungen der Verschlußteile prinzipiell möglich. Zum anderen erlaubt die großzügige Bemessung des Bereichs zwischen den Abdichtungsstellen, den man auch als Zwischengehäuse bezeichnen kann, und der daraus resultierende relativ große axiale Abstand der Sitzflächen jeweils eine zum Innenraum des Zwischengehäuses hin gerichtete Teilhubbewegung der Verschlußteile. Damit werden unter anderem zwei Vorteile erreicht, nämlich zum ersten jeweils die Bildung eines Drosselspaltes zwischen dem Verschlußteil und der freigelegten Sitzfläche, ohne daß es dadurch eines zusätzlichen zylindrischen Ansatzes am jeweiligen Verschlußteil bedarf. Der zweite Vorteil besteht darin, daß durch die Teilhübe, die zueinander orientiert sind, beim Freilegen der einen Sitzfläche die andere Sitzfläche, in der der zugeordnete Verschlußteil in Schließstellung verbleibt, partiell ebenfalls freigelegt ist. Dadurch kann diese partiell freigelegte Sitzfläche von dem in das Zwischengehäuse eintretenden Reinigungsmittel, parallel und fast zeitgleich zur vollständig freigelegten Sitzfläche, gleichfalls gereinigt werden.

Durch die erfindungsgemäß in Hubrichtung vorgesehenen großzügigen Abmessungsverhältnisse ist das Doppeldichtventil sehr druckschlagsicher ausgeführt. Selbst wenn in Folge eines Druckschlages einer der Verschlußteile entsprechend dessen jeweiliger Sitzreinigungsstellung spaltweit in eine Teiloffenstellung überführen würde, verbliebe der andere Verschlußteil aufgrund der im Zwischengehäuse vorliegenden axialen Abmessungsverhältnisse in seiner Schließstellung. Bevor auch diese Schließstellung verlassen würde, würde sich der Druck im Gehäuseteil, von dem der Druckschlag ausgeht, über den spaltweit geöffneten zugeordneten Ventilsitz abbauen.

Darüber hinaus besteht durch die, in Hubrichtung gesehen, großzügige Dimensionierung des Zwischengehäuses die Möglichkeit, große Zu- und Ablaufquerschnitte der Verbindungsleitung(en) zwischen dem Leckagehohlraum und der Umgebung des Doppeldichtventils vorzusehen, die unplanmäßige Leckagen oder bei der Sitzreinigung anfallende Reinigungsmittelmengen sicher drucklos abführen. Der Querschnitt der Leckagehohlraumöffnung(en) kann so gewählt werden, daß das Verhältnis zwischen dem Zulaufquerschnitt des freigelegten Sitzbereichs und dem bzw. den Ablaufquerschnitt(en) der in Frage kommenden Verbindungsleitung(en) stets kleiner 1 ist, vorzugsweise sogar sehr viel kleiner als 1. Um den Leckagehohlraum von außerhalb des Doppeldichtventils mit Reinigungs- oder Desinfektionsmittel ohne die Gefahr eines unzulässigen Druckaufbaus reinigen zu können, sieht eine weitere Ausgestaltung vor, daß der Leckagehohlraum mit zwei ventitgehäuseseitig angeordneten Leckagehohlraumöffnungen versehen ist, von denen die dem Abfluß aus dem Leckagehohlraum dienende zweite Leckagehohlraumöffnung hinsichtlich ihres Durchtrittsquerschnittes wenigstens so groß wie die erste ausgeführt ist, die für den Zufluß vorgesehen ist.

Weiterhin ist vorgesehen, daß jede der Leckagehohlraumöffnungen über ein zugeordnetes Absperrventil steuerbar ist, daß das erste Absperrventil die Zufuhr von Fluiden von außerhalb des Doppeldichtventils in den Leckagehohlraum und daß das zweite Absperrventil die Abfuhr von Fluiden aus dem Leckagehohlraum in die Umgebung des Doppeldichtventils steuert. Eine derartige Anordnung stellt sicher, daß der Leckagehohlraum in der Offenstellung des Doppeldichtventils zur Umgebung hin geschlossen ist. Darüber hinaus kann die bei der Sitzreinigung anfallende Reinigungsmittelmenge über das zweite Absperrventil abgeführt werden. Die gleiche Offenstellung nimmt das zweite Absperrventil ein, wenn sich das Doppeldichtventil in seiner Schließstellung befindet und ggf. an den Abdichtungsstellen auftretende Leckagen zur Verhinderung eines Druckaufbaus im Leckagehohlraum in die Umgebung des Doppeldichtventils abgeführt werden müssen.

Darüber hinaus kann der Leckagehohlraum im Durchfluß mit von außerhalb des Doppeldichtventils herangeführtem Reinigungs- oder Desinfektionsmittel gereinigt werden. In diesem Falle sind beide Absperrventile geöffnet. Die Steuerlogik für die Absperrventile in Abhängigkeit von den vorstehend genannten Schalt- oder Funktionsstellungen des Doppeldichtventils ist entweder zentral in der Umgebung des Doppeldichtventils oder am Doppeldichtventil selbst hinterlegt, wie dies eine weitere Ausführungsform vorschlägt.

Die beiden Abdichtungsstellen des Doppeldichtventils können derart ausgestaltet werden, daß eine jeweilige diskrete Sitzdichtung entweder in jedem der beiden Verschlußteile des Schließgliedes oder in jeder der beiden zylindrischen Begrenzungsfläche der Verbindungsöffnung angeordnet ist. Favorisiert wird, nicht zuletzt wegen des einfacheren Austauschs der Sitzdichtungen bei einem eingebauten Ventil, jene Ausgestaltung, bei der die erste Abdichtungsstelle durch eine schließgliedseitig angeordnete, mit der ersten Begrenzungsfläche zusammenwirkende diskrete erste Sitzdichtung und bei der die zweite Abdichtungsstelle durch eine schließgliedseitig angeordnete, mit der zweiten Begrenzungsfläche zusammenwirkende diskrete zweite Sitzdichtung realisiert sind.

Werden, wie dies ein weiterer Vorschlag vorsieht, die Verschlußteile des Schließgliedes durchmessergleich ausgeführt, dann ist das Schließglied unter der Einwirkung von im Leckagehohlraum auftretenden Druckkräften kräftemäßig ausbalanciert. Darüber hinaus ergeben sich durch die Durchmessergleichheit der Verschlußteile und der zugeordneten zylindrischen Sitzflächen keine Volumendefizite beim Schließ- und Öffnungsvorgang, die bei inkompressiblen Fluiden zu unerwünschten Druckspitzen im Leckagehohlraum führen können.

Die vorgeschlagene erfindungsgemäße Ausgestaltung des Doppeldichtventils im Bereich des Schließgliedes und der zugeordneten Sitzflächen erlaubt es ohne weiteres, die Reinigungsmittelmenge bei der jeweiligen Sitzreinigung zu begrenzen. Hierzu ist in der durch den Teilhub T1 bzw. T2 vollzogenen jeweiligen Teiloffenstellung des Doppeldichtventils an der dadurch freigelegten Abdichtungsstelle zwischen dem in Frage kommenden Verschlußteil und der zugeordneten Begrenzungsfläche jeweils ein Drosselspalt vorgesehen.

Für die favorisierte Teilhubvariante, bei der die Teilhübe zueinander orientiert sind, wird ein Antrieb vorgeschlagen, der sich angesichts des zu realisierenden Öffnungs- und Schließhubes und der beiden Teilhübe für die beiden Sitzreinigungsstellungen überraschend einfach gestaltet und darüber hinaus eine Reihe von weiteren vorteilhaften Eigenschaften aufweist, die bislang im Stand der Technik ohne Vorbild sind.

Der vorgeschlagene Antrieb weist unter anderem die folgenden Eigenschaften und Merkmale auf. Jeder der Hübe wird gegen feste, vorzugsweise metallische Anschläge gefahren, so daß hierdurch unter allen Betriebsbedingungen eindeutige Hubverhältnisse geschaffen sind. Der Antrieb kommt mit einer einzigen Feder aus, die in gekammerter Form durch einfache Montageschritte in den Antrieb eingesetzt wird. Um die Druckschlagsicherheit zu erhöhen, kann die Feder, die das Schließglied sowohl in der einen als auch in der anderen Richtung im Normalfall gegen Drücke in den Ventilgehäusen festlegt, mit einer Zusatzkraft unterstützt werden. Diese Zusatzkraft wirkt, wie die Vorspannkraft der Feder, in beiden Richtungen jeweils auf bewegliche Kolben und wird durch Beaufschlagung des Raumes, in dem die Feder vorgespannt ist, durch Druckmittelzufuhr realisiert.

Es ist bekannt, daß bei der Hubbewegung eines Feder-Kolbenantriebes aus der Verformung der Feder, wenn diese als Schraubenfeder ausgeführt ist, wie dies in der Regel der Fall ist, ein Drehmoment entsteht, welches sich über den Kolben und die mit diesem in Verbindung stehende Ventilstange auf das Schließglied überträgt. Wird nun die Durchführung der mit dem Schließglied verbundenen Ventilstange durch das Ventilgehäuse mit einem Balg überbrückt, der einerseits unmittelbar oder mittelbar am Schließglied oder der Ventilstange und andererseits unmittelbar oder mittelbar am Ventilgehäuse befestigt ist, dann überträgt sich die Drehbewegung des Schließgliedes auch auf den Balg und führt zusätzlich zu einer Torsionsbeanspruchung, die sich der üblichen Beanspruchung infolge Stauchens und Streckens überlagert. Derart beanspruchte Bälge sind in erhöhtem Maße der Bruchgefahr ausgesetzt. Um die Torsionsbeanspruchung des Balges zu unterbinden, wird nun vorgeschlagen, die durch die Hubbewegung der Feder mit einem Drehmoment beaufschlagten Kolben hinsichtlich der Übertragung dieses Drehmomentes von der Ventilstange zu entkoppeln. Dies gelingt dadurch, daß der jeweils von der Feder beaufschlagte erste Hauptverstellkolben und erste Teilhubkolben jeweils weitestgehend drehmomentfrei verschieblich auf der Ventilstange mittelbar gelagert sind, so daß eine ggf. von diesen Kolben ausgeführte jeweilige Drehbewegung nicht auf die Ventilstange übertragen werden kann.

Eine weitere vorteilhafte Besonderheit besteht darin, daß die Ventilstange und die Antriebsstange des Antriebes miteinander verschraubt sind, ohne daß hinsichtlich ihrer axialen Positionierung zueinander anfänglich ein Anschlag vorgesehen ist. Zunächst wird die Gesamtanordnung montiert, wobei die Lage der Ventil- und der Antriebsstange zueinander aufgrund der im jeweiligen Falle gegebenen Istmaße einer Vielzahl von Einzelteilen einer zufallsbedingten Zuordnung entspricht. In dieser zufälligen Zuordnung, die abhängig von der jeweiligen Gesamtsituation der Toleranzen und ihres Zusammenspiels von Ventil zu Ventil differieren kann, wird dann eine Sicherung der axialen Zuordnung zwischen Ventil- und Antriebsstange durchgeführt. Dies erfolgt erfindungsgemäß dadurch, daß die Verschraubung zwischen Ventil- und Antriebsstange mittels einer zwischen beiden in der Längsachse angeordneten Schraube, vorzugsweise einer Kopfschraube, die über eine in der Antriebsstange angeordnete Druckmittelbohrung von außerhalb des Doppelsitzventils zugänglich ist, in Zugrichtung gegeneinander verspannt sind. Hierdurch sind die Ventil- und Antriebsstange gegen Verdrehung zueinander gesichert.

Mit Hilfe der vorgenannten Kopfschraube ist darüber hinaus auch eine Montage oder Demontage des Antriebes ohne spezielles Werkzeug möglich. So wird beispielsweise zum Zwecke der Demontage die Verspannung zwischen Ventil- und Antriebsstange zunächst mittels der Kopfschraube gelöst. Alsdann können Ventilund Antriebsstange durch weiteres Ineinanderschrauben derart in ihrer Lage zueinander verändert werden, daß die im Antrieb unter Vorspannung gekammerte Feder ein Stück weiter zusammengedrückt wird. Hierdurch wird die Vorspannkraft der Feder, die sich im Antrieb beiderseits abstützt, über die Kammerung der Feder aufgenommen, so daß das Antriebsgehäuse von diesen Vorspannkräften entlastet ist. Dadurch wird es möglich, die Antriebsgehäuseteile, die über einen Sprengring miteinander verbunden sind, mühelos zu demontieren.

Da die Kopfschraube im Weg für die Zuführung des Druckmittels für den Öffnungs- und Schließhub liegt, kann eine in der Längsachse ausgeführte Durchgangsbohrung als Drossel für das Druckmittel zur Anpassung des Öffnungs- und Schließverhaltens des Antriebes ausgelegt werden.

Zur Erhöhung der Lebensdauer und der Betriebssicherheit des Doppelsitzventils sind alle Paarungsstellen, an denen Edelstahlteile eine Relativbewegung zueinander ausführen, mit einem Gleitlager ausgestattet. Darüber hinaus sind andere kritische Werkstoffpaarungen so gewählt, daß jeweils Edelstahl und Aluminium miteinander kombiniert werden. Zur Erhöhung der Betriebssicherheit und zur Verminderung des Verschleißes ist das Zwischengehäuse im Bereich seiner Sitzflächen oberflächengehärtet.

### KURZBESCHREIBUNG DER ZEICHNUNGEN

Ein bevorzugtes Ausführungsbeispiel der Erfindung ist in der Zeichnung dargestellt und wird nachfolgend beschrieben. Es zeigen
- **Figur 1**: in perspektivischer Darstellung eine Gesamtansicht des sitzreinigungsfähigen aseptischen Doppeldichtventils in Verbindung mit einem Antrieb und zwei Absperrventilen zur Verbindung des Leckagehohlraumes mit der Umgebung des Doppelsitzventils;
- **Figur 2**: einen Mittelschnitt durch das in seiner Schließstellung befindliche Doppeldichtventil gemäß Figur 1 in Verbindung mit einer vorteilhaften, ebenfalls im Schnitt dargestellten Ausführungsform seines Antriebes;
- **Figur 3**: ebenfalls im Mittelschnitt das in der Offenstellung befindliche Doppeldichtventil in der Ausgestaltung gemäß Figur 2;
- **Figur 4**: im Mittelschnitt das in der Sitzreinigungsstellung des unteren Verschlußteiles des Schließgliedes befindliche Doppeldichtventil gemäß Figur 2;
- **Figur 4a**: eine vergrößerte Darstellung des in Figur 4 mit Einzelheit **"X**" gekennzeichneten Bereichs des Schließgliedes und seines Sitzbereiches;
- **Figur 5**: im Mittelschnitt das in der Sitzreinigungsstellung des oberen Verschlußteiles des Schließgliedes befindliche aseptische Doppeldichtventil gemäß Figur 2 und
- **Figur 5a**: eine vergrößerte Darstellung des in Figur 5 mit Einzelheit **"Y**" gekennzeichneten Bereichs des Schließgliedes und seines Sitzbereiches.

### BEZUGSZEICHENLISTE DER VERWENDETEN ABKÜRZUNGEN

- V: Ventilgehäuse
- 1: erstes Gehäuseteil
- 1a: erster Rohranschluß
- 2: zweites Gehäuseteil
- 2a: zweiter Rohranschluß
- 3: Zwischengehäuse
- 3a: Verbindungsöffnung
- 3b: zweite Ausnehmung
- 3c: erste Begrenzungsfläche
- 3d: zweite Begrenzungsfläche
- 3e: erste Leckagehohlraumöffnung
- 3f: zweite Leckagehohlraumöffnung
- 3g: erste Sitzfläche
- 3h: zweite Sitzfläche
- 4: Schließglied
- 4a: erster Verschlußteil
- 4b: zweiter Verschlußteil
- 4c: erste Ausnehmung
- 5: erste Abdichtungsstelle
- 5a: erste Sitzdichtung
- 6: zweite Abdichtungsstelle
- 6a: zweite Sitzdichtung
- 18.4: axiales Gleitlager
- 7: Ventilstange
- 7a: Ventilstangenbohrung
- 7b: erste Querbohrung
- 7c: Längsausnehmung
- 7d: erster Rezeß
- 7e: zweiter Rezeß
- 7f: zweite Querbohrung
- 8: Balg
- 9: Anschlußflansch
- 9a: Durchführung
- 10: Latemengehäuse
- 10a: erste Öffnung
- 10b: zweite Öffnung
- 10c: dritte Öffnung
- 10d: vierte Öffnung
- 10e: Latemenraum
- 10f: Balginnenraum
- 10g: Latemenrezeß
- 11: Leckagehohlraum
- 12: Gehäusedichtung
- 13: erster Führungsring
- 14: erster Einsatz
- 15: zweiter Einsatz
- 16: erste Stangendichtung
- 17: Stopfen
- 18.1: erstes Gleitlager
- 18.2: zweites Gleitlager
- 18.3: drittes Gleitlager
- 19: erster Druckmittelanschluß
- 20: Antrieb
- 20a: Hauptverstelleinrichtung
- 20b: erste Einzelverstelleinrichtung
- 20c: zweite Einzelverstelleinrichtung
- 21: erstes Antriebsgehäuse
- 21a: Deckelteil
- 22: zweites Antriebsgehäuse
- 22a: Gehäuseboden
- 22b: hülsenförmiger Rücksprung
- 23: Feder
- 24: erster Hauptverstellkolben
- 24a: zylindrischer Ansatz
- 24b: ringförmige zylindrische Ausnehmung
- 25: zweiter Hauptverstellkolben
- 26: erster Teilhubkolben
- 26a: hülsenförmige Verlängerung
- 26b: erster Kragen
- 26c: dritter Rezeß
- 27: zweiter Teilhubkolben
- 28: dritter Teilhubkolben
- 29: Hülse
- 29a: zweiter Kragen
- 30: Antriebsstange
- 30a: Druckmittelbohrung
- 30b: Mitnehmer
- 31: Einsatz
- 31a: Durchtrittsöffnung
- 32: Schraube (Kopfschraube)
- 32a: Durchgangsbohrung
- 33: zweiter Druckmittelanschluß
- 34: dritter Druckmittelanschluß
- 35: vierter Druckmittelanschluß
- 36: zweiter Sicherungsring
- 37: zweiter Sprengring
- 38: Hauptverstellraum
- 39: erster Sicherungsring
- 40: Mitnehmerhülse
- 40a: Kopfteil
- 41: erste Kolbendichtung
- 42: zweite Kolbendichtung
- 43: dritte Kolbendichtung
- 44: vierte Kolbendichtung
- 45: fünfte Kolbendichtung
- 46: zweite innere Kolbendichtung
- 47: zweite Stangendichtung
- 48: dritte Stangendichtung
- 49: vierte Stangendichtung
- 50: fünfte Stangendichtung
- 51: erste innere Kolbendichtung
- 52: Hülse
- 52a: dritte Querbohrung
- 53: zweiter Führungsring
- 54: erster Sprengring
- 55: Klemmring
- 56: Antriebsgehäusedichtung
- V1: erstes Absperrventil
- V1.1: erstes Absperrglied
- V1.2: erstes Absperrgehäuse
- V2: zweites Absperrventil
- V1.3: Zulaufanschluß
- V2.1: zweites Absperrglied
- V2.2: zweites Absperrgehäuse
- V2.3: Ablaufanschluß
- a: Leerhub
- h: Hub
- s: axiales Spiel
- D: Druckmittel
- F: Durchflußströmung
- H: Vollhub
- R1: erstes Reinigungsmittel
- R2: zweites Reinigungsmittel
- T1: erster Teilhub
- T2: zweiter Teilhub

### DETAILLIERTE BESCHREIBUNG

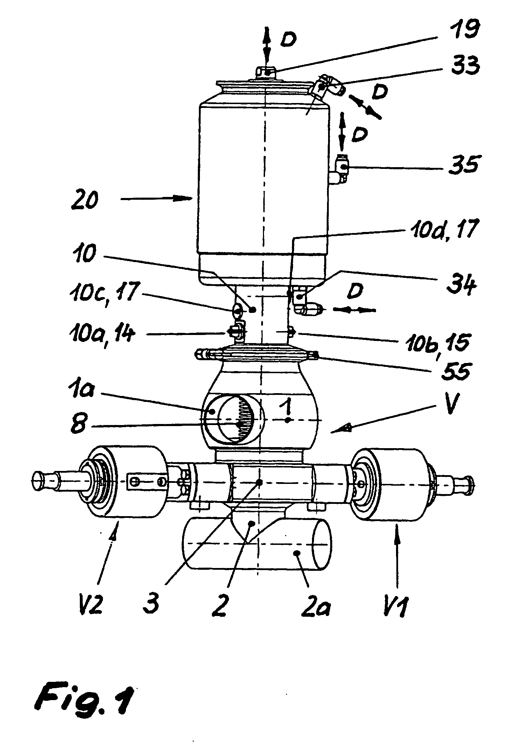

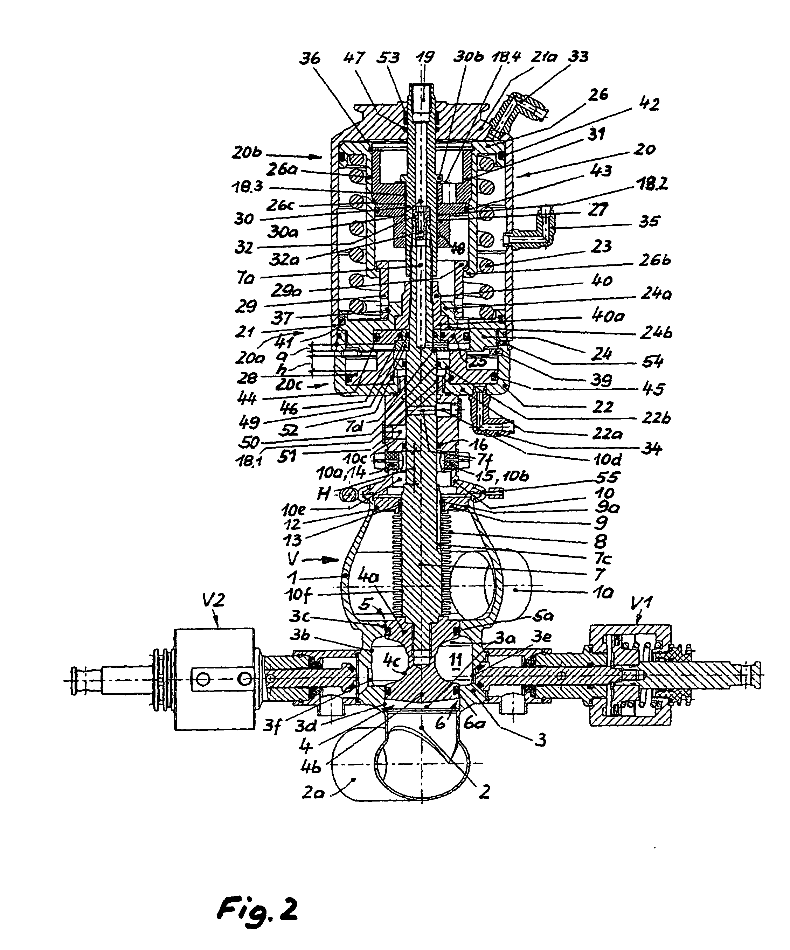

Die Perspektive **(Figur 1)** macht deutlich, daß ein zwischen einem ersten und einem zweiten Gehäuseteil 1 bzw. 2 eines Ventilgehäuses V vorgesehenes Zwischengehäuse 3, in Hubrichtung gesehen, eine von den üblichen Gehäuseabmessungen bekannter Doppeldichtventile abweichende axiale Dimensionierung aufweist. Zur Sicherstellung einer ausreichenden axialen Länge eines Balges 8 ist der erste Gehäuseteil 1 entsprechend größer als der zweite Gehäuseteil 2 ausgeführt. Die Gehäuseteile 1, 2 weisen jeweils Rohranschlüsse 1 a bzw. 2a auf, wobei zur Vermeidung eines Sumpfes im ersten Gehäuseteil 1 die Rohranschlüsse 1 a, bezogen auf die Darstellungslage des Ventils, mit Ihrer jeweiligen unteren inneren Mantellinie stufenlos in die Bodenfläche des Gehäuseteils 1 übergehen. Der erste Gehäuseteil 1 ist über eine Klemmflanschverbindung, von der im wesentlichen ein Klemmring 55 zu sehen ist, mit einem Latemengehäuse 10 verbunden, das wiederum an einem Antrieb 20 befestigt ist. Neben dieser Verbindung hat dieses Laternengehäuse 10 auch die Aufgabe, das ggf. im ersten Gehäuseteil 1 befindliche Produkt von einem in den Antrieb 20 eingebrachten Druckmittel D sicher zu trennen. Am Antrieb 20 sind maximal vier Druckmittelanschlüsse 19, 33, 34 und 35 vorgesehen, über die Druckmittel D, vorzugsweise Druckluft, zu- oder ,abgeführt werden kann. Zur Überwachung eines Innenraumes des Balges 8 weist das Latemengehäuse 10 zwei diametral einander gegenüberliegende Öffnungen 10a, 10b auf, in denen geeignete Einsätze 14, 15 angeordnet sind. Das Zwischengehäuse 3 verfügt über wenigstens eine steuerbare Leckagehohlraumöffnung 3e, in der Regel noch über eine zweite 3f, über die sein Innenraum mit der Umgebung des Doppeldichtventils verbunden werden kann (siehe auch Figur 2). Oberhalb der Öffnungen 10a, 10b weist das Latemengehäuse 10 zwei weitere, in axialer Richtung gegeneinander versetzte Öffnungen, 10c und 10d auf, die mit einer zweiten Querbohrung 7f innerhalb einer Ventilstange 7 korrespondieren können, der Einführung eines Werkzeuges zur Montage oder Demontage des Antriebes 20 dienen und ansonsten mit einem Stopfen 17 verschlossen sind. Am Zwischengehäuse 3 sind, einander gegenüberliegend, zwei Absperrventile V1 bzw. V2 angeordnet, die die Leckagehohlraumöffnungen 3e, 3f steuern.

Das Zwischengehäuse 3 **(Figur 2)** ist in Richtung der Längsachse des Doppeldichtventils von einer Verbindungsöffnung 3a durchdrungen, wodurch im Zusammenwirken mit einer gehäuseseitigen, ringförmig umlaufenden, die Längsachse konzentrisch umschließenden zweiten Ausnehmung 3b dort im Zwischengehäuse 3 eine erste und eine zweite zylindrische Begrenzungsfläche 3c bzw. 3d der Verbindungsöffnung 3a gebildet werden. Die Durchmesser der zylindrischen Begrenzungsflächen 3c, 3d werden vorzugsweise gleichgroß ausgeführt; eine unterschiedlich große Ausführung zum Zwecke einer erleichterten Montage oder Demontage eines Schließgliedes 4 ist jedoch auch möglich. Die zylindrischen Begrenzungsflächen 3c, 3d korrespondieren in der dargestellten Schließstellung des Doppeldichtventils mit einem ersten Verschlußteil 4a bzw. einem zweiten Verschlußteil 4b des Schließgliedes 4. Zwischen den beiden Verschlußteilen 4a, 4b ist eine die Längsachse des Doppeldichtventils konzentrisch umschließende erste Ausnehmung 4c vorgesehen, die zweckmäßigerweise so axial dimensioniert ist, daß sie näherungsweise mit der zweiten Ausnehmung 3b im Zwischengehäuse 3 korrespondiert. Der erste Verschlußteil 4a nimmt eine erste Sitzdichtung 5a und der zweite Verschlußteil 4b eine zweite Sitzdichtung 6a auf, die jeweils radial wirken und in Verbindung mit der ersten Sitzfläche 3c bzw. der zweiten Sitzfläche 3d zwei Abdichtungsstellen 5 und 6 des Doppeldichtventils bilden. Der durch die Ausnehmungen 3b und 4c gebildete ringförmige Innenraum des Zwischengehäuses 3 stellt insgesamt einen Leckagehohlraum 11 des Doppeldichtventils dar, der wenigstens über die erste Leckagehohlraumöffnung 3e mit der Umgebung des Doppeldichtventils verbunden ist.

Das Schließglied 4 ist mit der durch den ersten Gehäuseteil 1 hindurch- und aus diesem herausgeführten Ventilstange 7 verbunden. Letztere durchdringt dabei, geführt durch einen ersten Führungsring 13, einen den ersten Gehäuseteil 1 verschließenden Anschlußflansch 9, wobei eine Durchführung 9a mittels des Balges 8, der einerseits unmittelbar am Schließglied 4 und andererseits unmittelbar am Anschlußflansch 9 befestigt ist, überbrückt wird. Die Ventilstange 7 ist durch das Latemengehäuse 10 über die Durchführung 9a hindurchgeführt und endet in dem Antrieb 20. Zwischen Laternengehäuse 10 und Ventilstange 7 wird oberhalb des Anschlußflansches 9 ein Laternenraum 10e gebildet, der über eine in der Ventilstange 7 angeordnete Längsausnehmung 7c mit dem zwischen der Ventilstange 7 und dem Balg 8 gebildeten Balginnenraum 10f in Verbindung steht. Über die Öffnungen 10a und 10b lassen sich der Laternenraum 10e und damit auch der Balginnenraum 10f überwachen. Eine derartige Balgüberwachung ist beispielsweise in der Druckschrift **DE 198 31 662 A1** beschrieben und wird an dieser Stelle nicht näher erläutert. Im dargestellten Ausführungsbeispiel sind die Öffnungen 10a und 10b mit dem ersten und dem zweiten Einsatz 14 bzw. 15, beispielsweise jeweils einer Entlüftungsschraube, versehen. Der Anschlußflansch 9 ist im ersten Gehäuseteil 1 über eine Gehäusedichtung 12 statisch abgedichtet, die den aseptischen Anforderungen genügt. Der Latemenraum 10e ist antriebsseitig gegenüber der Ventilstange 7 über eine erste Stangendichtung 16 abgedichtet. Die Ventilstange 7 ist an ihrem antriebsseitigen Austritt aus dem Latemengehäuse 10 in letzterem mittels eines ersten Gleitlagers 18.1 gelagert.

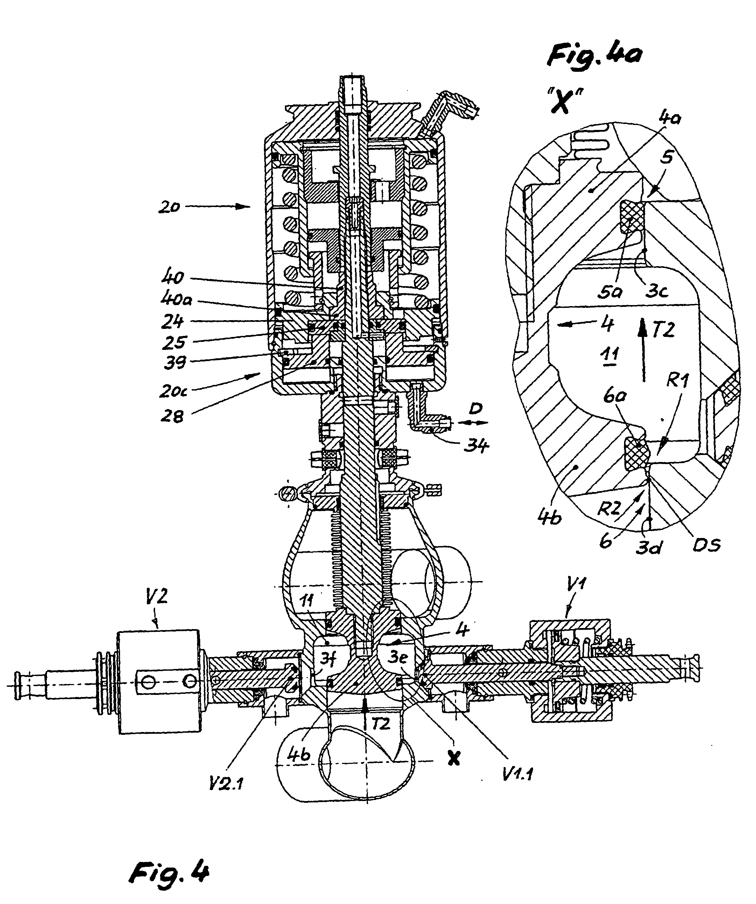

Der Antrieb 20 besteht aus einem ersten topfartigen, bezogen auf die Darstellungslage, nach unten offenen ersten Antriebsgehäuse 21 und einem spiegelbildlich hierzu ausgebildeten topfförmigen zweiten Antriebsgehäuse 22. Letzteres ist in ersteres ein Stück hineingesteckt; beide sind mittels eines ersten Sprengringes 54 miteinander formschlüssig verbunden. Der Antrieb 20 beherbergt eine Hauptverstelleinrichtung 20a für einen Vollhub H und beiderseits jeweils eine Einzelverstelleinrichtung 20b bzw. 20c für Teilhübe T1, T2 **(Figuren 4 bis 5a).** Das zweite Antriebsgehäuse 22 ist untenseits von einem Gehäuseboden 22a begrenzt, der einen zu ihm konzentrisch angeordneten, gegen die Ventilstange 7 über eine fünfte Stangendichtung 50 abgedichteten hülsenförmigen Rücksprung 22b aufweist, in den das antriebsseitige Ende des Latemengehäuses 10 eingeschraubt ist. Im zweiten Antriebsgehäuse 22 ist ein dritter Teilhubkolben 28 vorgesehen, der innenseits auf dem hülsenförmigen Rücksprung 22b verschieblich und über eine erste innere Kolbendichtung 51 abgedichtet gelagert ist und der außenseits gegenüber dem Mantelteil des zweiten Antriebsgehäuses 22 über eine fünfte Kolbendichtung 45 abgedichtet ist. Der dritte Teilhubkolben 28 kann auf dem hülsenförmigen Rücksprung 22b einen Hub h ausführen, der durch einen im zweiten Antriebsgehäuse 22 formschlüssig Aufnahme findenden ersten Sicherungsring 39 begrenzt ist. Der Dritte Teilhubkolben 28 ist Bestandteil der zweiten Einzelverstelleinrichtung 20c.

Oberhalb des dritten Teilhubkolbens 28 ist ein zweiter Hauptverstellkolben 25 angeordnet, der innenseits auf einer Hülse 52 verschieblich angeordnet und dort über eine zweite innere Kolbendichtung 46 abgedichtet ist. Außenseits ist der zweite Hauptverstellkolben 25 in einem ersten Hauptverstellkolben 24 geführt und über eine vierte Kolbendichtung 44 abgedichtet. Die Hülse 52 ist auf der Ventilstange 7 in axialer Richtung festgelegt, und zwar zwischen einem an der Ventilstange 7 ausgebildeten ersten Rezeß 7d und einer oberhalb desselben auf die Ventilstange 7 aufgeschraubten Mitnehmerhülse 40, und über eine vierte Stangendichtung 49 abgedichtet. Erster und zweiter Hauptverstellkolben 24, 25 sind Bestandteil der Hauptverstelleinrichtung 20a.

Im ersten Antriebsgehäuse 21 ist unmittelbar unterhalb eines Deckelteils 21 a ein erster Teilhubkolben 26 vorgesehen, der sich in eine gegenüber dessen Außendurchmesser reduzierte, konzentrisch angeordnete hülsenförmige Verlängerung 26a nach unten hin fortsetzt. Letztere endet in einem im Durchmesser etwas reduzierten ersten Kragen 26b. Die Abdichtung des ersten Teilhubkolbens 26 im Mantelteil des Antriebsgehäuses 21 erfolgt über eine zweite Kolbendichtung 42.

Der den zweiten Hauptverstellkolben 25 innenseits aufnehmende erste Hauptverstellkolben 24 ist gegen das Mantelteil des ersten Antriebsgehäuses 21 über eine erste Kolbendichtung 41 abgedichtet und besitzt innenseits und auf seiner dem ersten Teilhubkolben 26 zugewandten Seite einen zylindrischen Ansatz 24a. Auf letzterem ist mittels eines zweiten Sprengringes 37 eine Hülse 29 mit ihrem unteren Ende formschlüssig befestigt. An ihrem anderen Ende besitzt die Hülse 29 einen in radialer Richtung nach außen vorspringenden zweiten Kragen 29a, der in die hülsenförmige Verlängerung 26a innenseits eingreift und, in radialer Richtung gesehen, mit dem ersten Kragen 26b überlappt. Die Anordnung aus dem ersten Hauptverstellkolben 24, der Hülse 29 und dem ersten Teilhubkolben 26 in Verbindung mit dessen hülsenförmiger Verlängerung 26a bilden einen Käfig für eine in diesem vorgespannte Feder 23. Dabei wird die Kraft der vorgespannten Feder 23 einerseits über den ersten Teilhubkolben 26 am Deckelteil 21a und andererseits über den ersten Hauptverstellkolben 24 am stimseitigen Ende des Mantelteils des zweiten Antriebsgehäuses 22 abgestützt. Der erste Hauptverstellkolben 24 bildet im Mantelteil des ersten Antriebsgehäuses 21 und im Zusammenwirken mit dem zweiten Hauptverstellkolben 25 und der Hülse 52 eine resultierende, von einem Druckmittel D beaufschlagbare Wirkfläche, die innenseits um die Querschnittsfläche der Ventilstange 7 geschmälert ist.

Auf die Ventilstange 7, die mit ihrem oberen Ende etwas über das obere Ende der Hülse 29 hinausreicht, ist eine Antriebsstange 30 aufgeschraubt, die mit ihrem anderen Ende durch den Deckelteil 21 a hindurchgeführt ist und oberhalb desselben endet. Die Antriebsstange 30 wird über eine zweite Stangendichtung 47 im Deckelteil 21a gedichtet und über einen zweiten Führungsring 53 in letzterem geführt. Sie ist mit einer durchgehenden Druckmittelbohrung 30a versehen, die an ihrem oberen Ende in den ersten Druckmittelanschluß 19 ausmündet und an ihrem unteren Ende in eine Ventilstangenbohrung 7a der Ventilstange 7 übergeht. Antriebsstange 30 und Ventilstange 7 sind über eine Kopfschraube 32 gegeneinander verspannt, so daß eine Verdrehung der beiden Stangen 7 und 30 gegeneinander nicht mehr möglich ist. Dies wird dadurch erreicht, daß die Kopfschraube 32 einerseits in das Ende der Ventilstange 7 eingeschraubt ist und andererseits mit ihrem Kopf an einem nicht näher bezeichneten Rezeß innerhalb der Antriebsstange 30 anliegt. Die Kopfschraube 32, die zweckmäßigerweise mit einem Innensechskant ausgestattet ist und über eine Durchgangsbohrung 32a die Druckmittelbohrung 30a mit der Ventilstangenbohrung 7a verbindet, kann über die Druckmittelbohrung 30a von oben angezogen oder gelöst werden.

In der hülsenförmigen Verlängerung 26a ist ein Einsatz 31 formschlüssig eingebettet. Seine Festlegung erfolgt einerseits über einen dritten Rezeß 26c in der hülsenförmigen Verlängerung 26a und andererseits über einen zweiten Sicherungsring 36. Der Einsatz 31 ist innenseits mit einem dritten Gleitlager 18.3 armiert und wird von der dort verschieblichen Ventilstange 7 durchdrungen. Die Antriebsstange 30 besitzt einen Mitnehmer 30b, der sich auf dem Einsatz 31, von oben her gesehen, über ein axiales Gleitlager 18.4 abstützt. Unterhalb des Einsatzes 31 ist innerhalb der hülsenförmigen Verlängerung 26a ein zweiter Teilhubkolben 27 vorgesehen, der innenseits auf der Antriebsstange 30 mittels eines zweiten Gleitlagers 18.2 verschieblich geführt und über eine dritte Stangendichtung 48 abgedichtet ist. Die außenseitige Abdichtung des zweiten Teilhubkolbens 27 erfolgt über eine dritte Kolbendichtung 43. Der erste und der zweite Teilhubkolben 26, 27 sind Bestandteil der ersten Einzelverstelleinrichtung 20b.

Die axiale Verschiebebewegung des zweiten Teilhubkolbens 27 ist nach oben durch den Einsatz 31 und nach unten durch das stimseitige obere Ende der Mitnehmerhülse 40 begrenzt. Der erste Hauptverstellkolben 24 ist innenseits auf der Mitnehmerhülse 40 verschieblich gelagert. Letztere ist wiederum auf die Ventilstange 7 aufgeschraubt, dort an der Hülse 52 in axialer Richtung festgelegt und besitzt einen Kopfteil 40a, der die Ventilstange 7 oberhalb der Hülse 52 ein Stück in axialer Richtung umfaßt und mit einer ringförmigen zylindrischen Ausnehmung 24b im zylindrischen Ansatz 24a des ersten Hauptverstellkolbens 24 korrespondiert.

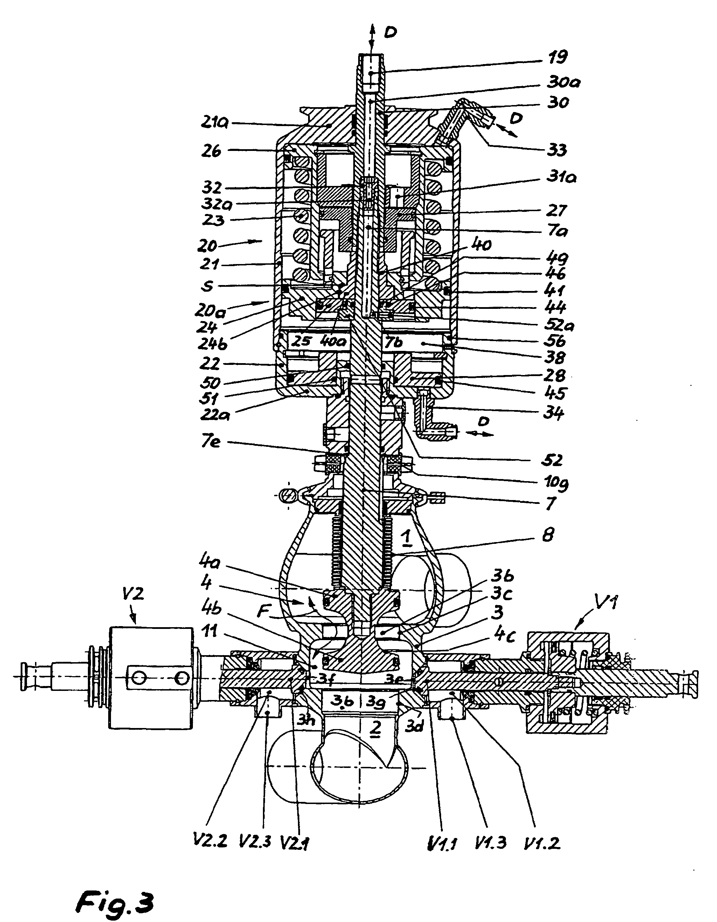

Das über den ersten Druckmittelanschluß 19 zugeführte Druckmittel D **(Figur 3)** gelangt über die Druckmittelbohrung 30a in der Antriebsstange 30 und über die in der Kopfschraube 32 angeordnete Durchgangsbohrung 32a in die Ventilstangenbohrung 7a, um von dort über eine erste Querbohrung 7b und anschließend über eine in der Hülse 52 angeordnete dritte Querbohrung 52a in einen zwischen dem ersten Hauptverstellkolben 24, dem zweiten Hauptverstellkolben 25 und der Hülse 52 einerseits und dem dritten Teilhubkolben 28 andererseits gebildeten Hauptverstellraum 38 auszumünden. Letzterer ist oberhalb über die erste und vierte Kolbendichtung 41 bzw. 44 sowie die zweite innere Kolbendichtung 46 und die vierte Stangendichtung 49, unterhalb über die fünfte Kolbendichtung 45, die erste innere Kolbendichtung 51 und die fünfte Stangendichtung 50 und zwischen den Antriebsgehäusen 21, 22 über eine Antriebsgehäusedichtung 56 abgedichtet.

Der zweite Druckmittelanschluß 33 ist am Deckelteil 21a angeordnet und das hierüber zugeführte Druckmittel D beaufschlagt den ersten Teilhubkolben 26 von oben. Gleichzeitig kann das Druckmittel D über den Innenraum der hülsenförmigen Verlängerung 26a und eine Durchtrittsöffnung 31 a innerhalb des Einsatzes 31 die Oberseite des zweiten Teilhubkolbens 27 beaufschlagen.

Der dritte Druckmittelanschluß 34 ist im Gehäuseboden 22a angeordnet und das über ihn zugeführte Druckmittel D gelangt auf die Unterseite des dritten Teilhubkolbens 28. Im Mantelteil des ersten Antriebsgehäuses 21 ist schließlich der vierte Druckmittelanschluß 35 (siehe **Figur 2)** vorgesehen. Druckmittel D, welches über diesen Anschluß 35 zugeführt wird, beaufschlagt einerseits den ersten Hauptverstellkolben 24 oberhalb und andererseits den ersten Teilhubkolben 26 unterhalb, wodurch eine die Vorspannkraft der Feder 23 unterstützende und diese überlagernde Zusatzkraft im Antrieb 20 erzeugt wird. Abhängig von der Höhe des Druckes des zugeführten Druckmittels D wird durch diese Zusatzkraft die Druckschlagsicherheit des Schließgliedes 4 in beiden Richtungen entsprechend erhöht.

Die volle Offenstellung des aseptischen Doppeldichtventils **(Figur 3)** wird eingeleitet und anschließend vollzogen, wenn dem Hauptverstellraum 38 der Hauptverstelleinrichtung 20a über den ersten Druckmittelanschluß 19 am Antrieb 20 Druckmittel D über die Druckmittelbohrung 30a, die Durchgangsbohrung 32a, die Ventilstangenbohrung 7a und die erste und dritte Querbohrung 7b bzw. 52a zugeführt wird. Dadurch werden der erste und zweite Hauptverstellkolben 24 bzw. 25 so wie die Hülse 52 gegen die Kraft der Feder 23 nach oben verschoben und nehmen dabei die mit der Ventilstange 7 verbundene Mitnehmerhülse 40 um den in Figur 2 gekennzeichneten Vollhub H mit. Dieser Vollhub H ist nach oben begrenzt, wenn die Verstellstange 7 mit einem zweiten Rezeß 7e an einem Laternenrezeß 10g zur Anlage kommt. Dabei ist der Kopfteil 40a der Mitnehmerhülse 40 derart axial bemessen, daß er in der ringförmigen zylindrischen Ausnehmung 24b im ersten Hauptverstellkolben 24 mit geringfügigem axialen Spiel s eingebettet ist. Durch diesen Sachverhalt sind der erste Hauptverstellkolben 24 und die Mitnehmerhülse 40 bezüglich des am ersten Hauptverstellkolben 24 durch die Deformation der Feder 23 ggf. auftretenden Drehmomentes entkoppelt. Dieses Drehmoment und die daraus ggf. resultierende Drehbewegung wird allenfalls auf den zweiten Hauptverstellkolben 25 übertragen, der sich auf der Hülse 52 verdrehen kann, wodurch sich keine Auswirkungen auf die Ventilstange 7 und damit letztlich auf den Balg 8, der empfindlich gegen Torsionsbeanspruchung ist, ergeben. In adäquater Weise ist der erste Teilhubkolben 26 von der Ventilstange 7 bzw. der Antriebsstange 30 entkoppelt.

In der Offenstellung ist das Schließglied 4 derart positioniert, daß sein erster Verschlußteil 4a im ersten Gehäuseteil 1 positioniert und der zweite Verschlußteil 4b etwa in der Mitte des Zwischengehäuses 3 angeordnet ist. In dieser Lage ist die untere Durchtrittsbohrung 3b vollständig freigegeben, während die obere Durchtrittsbohrung 3b lediglich vom durch die erste Ausnehmung 4c eingeschnürten Mittelteil des Schließgliedes 4 verengt wird.

Der Durchtrittsquerschnitt im Bereich der ersten Sitzfläche 3c wird dabei so dimensioniert, daß dort unter Berücksichtung der Verengung durch den Mittelteil des Schließgliedes 4 dem Nennquerschnitt der an den zweiten Gehäuseteil 2 über den zweiten Rohranschluß 2a angeschlossenen Rohrleitung entsprechende Durchtrittsverhältnisse sichergestellt sind (Durchflußströmung F).

In der Offenstellung des Doppeldichtventils verschließt ein erstes Absperrglied V1.1 des ersten Absperrventils V1 auf einer zugeordneten ersten Sitzfläche 3g die erste Leckagehohlraumöffnung 3e. In gleicher Weise ist die zweite Leckagehohlraumöffnung 3f über ein zweites Absperrglied V2.1 des zweiten Absperrventils V2 auf einer zugeordneten zweiten Sitzfläche 3h verschlossen, so daß die vom ersten Gehäuseteil 1 zum zweiten Gehäuseteil 2 durch den Leckagehohlraum 11 hindurchtretende Durchflußströmung F nicht aus dem Zwischengehäuse 3 in die Umgebung des Doppeldichtventils austreten kann. Das erste Absperrventil V1 ist über ein mit einem Zulaufanschluß V1.3 versehenes erstes Absperrgehäuse V1.2 und das zweite Absperrventil V2 ist über ein mit einem Ablaufanschluß V2.3 versehenes zweites Absperrgehäuse V2.2 jeweils am Zwischengehäuse 3 angeordnet.

Zur Realisierung der Sitzreinigungsstellung des zweiten und damit des unteren Verschlußteils, 4b **(Figur 4)** wird über den dritten Druckmittelanschluß 34 Druckmittel D in die zweite Einzelverstelleinrichtung 20c des Antriebs 20 eingeleitet. Dieses gelangt auf die Unterseite des dritten Teilhubkolbens 28, wodurch dieser nach oben bis zur Anlage an dem im zweiten Antriebsgehäuse 22 Aufnahme findenden ersten Sicherungsring 39 verschoben wird. Dabei legt der dritte Teilhubkolben 28 den in **Figur 2** mit h bezeichneten Hub zurück. Da der dritte Teilhubkolben 28 erst nach einem Leerhub a (s. Figur 2) am zweiten Hauptverstellkolben 25 zur Anlage kommt und letzterer somit erst dann den ersten Hauptverstellkolben 24 und, parallel hierzu, den Kopfteil 40a der Mitnehmerhülse 40 nach oben bewegt, ergibt sich aus der Differenz zwischen dem Hub h und dem Leerhub a ein für die Sitzreinigung maßgeblicher Teilhub **T2** = **h - a** für die Ventilstange 7 und das mit dieser verbundene Schließglied 4 und somit zwangsläufig auch für den zweiten Verschlußteil 4b.

Die Lage des Schließgliedes 4 und seines zweiten Verschlußteils 4b nach dem Teilhub T2 verdeutlicht die vergrößerte Darstellung gemäß **Figur 4a.** Man erkennt, daß bei freigelegter zweiter Sitzdichtung 6a zwischen der zweiten Sitzfläche 3d und dem zweiten Verschlußteil 4b ein Drosselspalt DS gebildet wird, der die Menge eines von oben zuströmenden ersten Reinigungsmittels R1 (auch Desinfektionsmittel oder Dampf) oder eines von unten zuströmenden zweiten Reinigungsmittels R2 wirksam begrenzt. Die erste Sitzdichtung 5a des ersten Verschlußteils 4a verbleibt dabei in ausreichendem Maße in der ersten Sitzfläche 3c, wobei unterhalb des ersten Verschlußteils 4a die erste Sitzfläche 3c partiell freigelegt und dem im Leckagehohlraum 11 befindlichen Reinigungsmittel R1, R2 zugänglich gemacht wird. In der Sitzreinigungsstellung des Verschlußteiles 4b befindet sich das erste Absperrventil V1 in seiner Schließstellung, in der die erste Leckagehohlraumöffnung 3e durch das erste Absperrglied V1.1 geschlossen ist. Zur Ableitung des über die freigelegte Abdichtungsstelle 6 in den Leckagehohlraum 11 einströmenden zweiten Reinigungsmittels R2 befindet sich das zweite Absperrglied V2.1 des zweiten Absperrventils V2 in seiner Offenstellung, so daß ein Abfluß des Reinigungsmittels R2 aus dem Leckagehohlraum 11 über die zweite Leckagehohlraumöffnung 3f in die Umgebung des Doppeldichtventils sichergestellt ist.

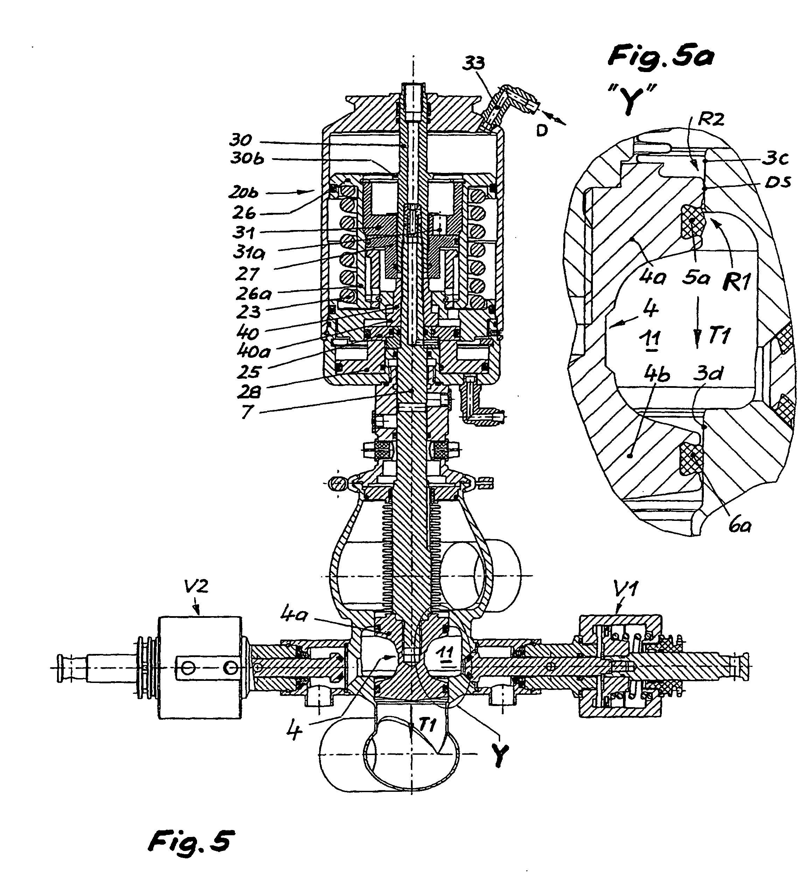

Die für die Sitzreinigung des ersten und damit des oberen Verschlußteils 4a erforderliche Teilhubbewegung T1 der ersten Einzelverstelleinrichtung 20b **(Figur 5)** wird eingeleitet und vollzogen, wenn über den zweiten Druckmittelanschluß 33 Druckmittel D dem nicht näher bezeichneten Raum oberhalb des ersten Teilhubkolbens 26 zugeführt wird. Dabei gelangt das Druckmittel D über die Durchtrittsöffnung 31 a auf die Oberseite des zweiten Teilhubkolbens 27 und verschiebt diesen so weit wirkungslos nach unten, lediglich die vorliegenden Reibungswiderstände überwindend, bis er an dem oberen stimseitigen Ende der Mitnehmerhülse 40 zur Anlage kommt. In dieser Lage der Mitnehmerhülse 40, die aus **Figur 2** ersichtlich ist, kann sich die Ventilstange 7 nur dann weiter abwärts bewegen, wenn der Einsatz 31 und damit der erste Teilhubkolben 26 nach unten bewegt werden. Dies ist dann der Fall, wenn der wirksame Druck des Druckmittels D im Zusammenwirken mit der am ersten Teilhubkolben 26 wirksamen, durch den Innendurchmesser der hülsenförmigen Verlängerung 26a begrenzten Ringfläche eine die Vorspannkraft der Feder 23 überwindende Druckkraft erzeugt. Der auf die Fläche des zweiten Teilhubkolbens 27 gleichermaßen wirkende Druck des Druckmittels D erzeugt dabei eine Kraft auf die Ventilstange 7, die dafür sorgt, daß letztere über den Mitnehmer 30b an der Antriebsstange 30 auf den Einsatz 31 gedrückt wird.

In dem Maße, wie der erste Teilhubkolben 26 unter dem Einfluß des Druckmittels D nach unten bewegt wird, wird die Ventilstange 7 nachgeführt. Dies ist jedoch nur dann der Fall, wenn die über den zweiten Teilhubkolben 27 unter der Wirkung des Druckmittels D an der Ventilstange 7 angreifende Kraft so groß ist, daß die am Schließglied 4 aus den Gehäuseteilen 1 und 2 wirkenden Kräfte überwunden werden können. Ist dies nicht der Fall, dann verbleibt die Ventilstange 7 in ihrer in Figur 2 dargestellten Lage und es bewegt sich zunächst der erste Teilhubkolben 26 nach unten, bis er über seinen Einsatz 31 am zweiten Teilhubkolben 27 zur Anlage kommt. Von nun an ist die Fläche, die von dem ersten Teilhubkolben 26 und dem zweiten Teilhubkolben 27 abzüglich der Querschnittsfläche der Antriebsstange 30 gebildet wird, insgesamt wirksam und die Gesamtanordnung, bestehend aus dem ersten Teilhubkolben 26, dem Einsatz 31, dem zweiten Teilhubkolben 27, der Mitnehmerhülse 40 und dem zweiten Hauptverstellkolben 25, werden um den in **Figur 2** mit a gekennzeichneten Hub T1
(**T1 = a**) nach unten bewegt, bis der zweite Hauptverstellkolben 25 am dritten Teilhubkolben 28 zur Anlage kommt.

Die nunmehr im Sitzbereich gegebene Lage des Schließgliedes 4 und seines ersten Verschlußteils 4a zeigt die vergrößerte Darstellung gemäß **Figur 5a.** Man erkennt, daß bei freigelegter erster Sitzdichtung 5a zwischen der ersten Sitzfläche 3c und dem ersten Verschlußteil 4a ein Drosselspalt DS gebildet wird, den das an den freigelegten Sitzbereich von unten herangeführte Reinigungsmittel R1 oder das von oben herangeführte Reinigungsmittel R2 passieren muß. In dieser Sitzreinigungsstellung verbleibt die zweite Sitzdichtung 6a des zweiten Verschlußteiles 4b in der zugeordneten zweiten Sitzfläche 3d, wobei oberhalb des zweiten Verschlußteils 4b die zweite Sitzfläche 3d partiell freigelegt und dem im Leckagehohlraum 11 befindlichen Reinigungsmittel R1, R2 zugänglich gemacht wird.

Das in der Sitzreinigungsstellung des Verschlußteiles 4a in den Leckagehohlraum 11 eintretende zweite Reinigungsmittel R2 wird in gleicher Weise, wie dies bereits für die Sitzreinigungsstellung des Schließgliedes 4b in den Figuren 4 und 4a beschrieben wurde, in die Umgebung des Doppeldichtventils abgeleitet. Hierzu nehmen die Absperrventile V1 und V2 ihre dort bereits beschriebenen Schaltstellungen ein.

## Patentansprüche

1. Sitzreinigungsfähiges aseptisches Doppeldichtventil mit Leckkontrolle, mit einem translatorisch verschiebbaren Schließglied (4), das eine ein erstes (1) mit einem zweiten Gehäuseteil (2) eines Ventilgehäuses (V) miteinander verbindende Verbindungsöffnung (3a) steuert, mit einem Antrieb (20), der eine Hauptverstelleinrichtung (20a) für einen Vollhub (H) (Offenstellung) und zwei Einzelverstelleinrichtungen (20b, 20c) für Teilhübe (T1; T2) (Teiloffenstellungen) des Schließgliedes (4) aufweist, mit dem Schließglied (4), das umfangsseitig, in der Verschieberichtung gesehen, jeweils mit ventilgehäuseseitig korrespondierenden, die Verbindungsöffnung (3a) berandenden zylindrischen Begrenzungsflächen (3c, 3d) zwei axial beabstandete Abdichtungsstellen (5, 6) bildet, die jeweils mit einer in radialer Richtung wirksamen Sitzdichtung (5a, 6a) ausgestattet sind, mit einer im Bereich zwischen den Abdichtungsstellen (5, 6) vorgesehenen Ausnehmung (3b, 4c), die diesen Bereich ringförmig umfaßt und einen Leckagehohlraum (11) bildet, der über wenigstens einen ventilgehäuseseitig ausgeführten, steuerbaren Verbindungsweg mit der Umgebung des Doppeldichtventils verbunden ist, und mit einem Balg (8), der eine Durchführung (9a) einer das Schließglied (4) mit dem Antrieb (20) verbindenden Stange (7) im Bereich dieser Durchführung (9a) spaltfrei überbrückt, **dadurch gekennzeichnet,**
• **daß** im Schließglied (4) zwischen den Abdichtungsstellen (5, 6) eine ringförmig umlaufende erste Ausnehmung (4c) vorgesehen ist, die dort einen ersten (4a) und einen zweiten Verschlußteil (4b) ausbildet,
• **daß** gehäuseseitig zwischen den zylindrischen Begrenzungsflächen (3c, 3d) der Verbindungsöffnung (3a) eine ringförmig umlaufende zweite Ausnehmung (3b) vorgesehen ist,
• **daß** in der Schließstellung des Doppeldichtventils die beiden Ausnehmungen (3b, 4c) näherungsweise miteinander korrespondieren,
• und daß in der Offenstellung des Doppeldichtventils das Schließglied (4) derart um den Vollhub (H) verschoben ist, daß eine der beiden zylindrischen Begrenzungsflächen (3c, 3d) mit der ersten Ausnehmung (4c) und, abhängig davon, einer der beiden Verschlußteile (4a, 4b) mit der zweiten Ausnehmung (3b) jeweils den erforderlichen Durchtrittsquerschnitt des Doppeldichtventils begrenzen.

2. Sitzreinigungsfähiges aseptisches Doppeldichtventil mit Leckkontrolle nach Anspruch 1, **dadurch gekennzeichnet, daß** der Antrieb (20), bezogen auf die Einbaulage des Doppeldichtventils, oberhalb des Ventilgehäuses (V) angeordnet und daß das Schließglied (4) in seiner Offenstellung zum Antrieb (20) hin verschoben ist.

3. Sitzreinigungsfähiges aseptisches Doppeldichtventil mit Leckkontrolle nach Anspruch 1 oder 2, **dadurch gekennzeichnet, daß** zum Zwecke der Sitzreinigung
• der ersten Abdichtungsstelle (5), die zwischen dem ersten Verschlußteil (4a) und der zugeordneten ersten zylindrischen Begrenzungsfläche (3c) ausgebildet ist, das Schließglied (4) um den Teilhub (T1) und
• der zweiten Abdichtungsstelle (6), die zwischen dem zweiten Verschlußteil (4b) und der zugeordneten zweiten zylindrischen Begrenzungsfläche (3d) ausgebildet ist, das Schließglied (4) um den gegensinnigen Teilhub (T2) verschoben ist.

4. Sitzreinigungsfähiges aseptisches Doppeldichtventil mit Leckkontrolle nach Anspruch 3, **dadurch gekennzeichnet, daß** die Teilhübe (T1, T2) zueinander orientiert sind.

5. Sitzreinigungsfähiges aseptisches Doppeldichtventil mit Leckkontrolle nach einem der Ansprüche 1 bis 4, **dadurch gekennzeichnet, daß** der Leckagehohlraum (11) mit zwei ventilgehäuseseitig angeordneten Leckagehohlraumöffnungen (3e, 3f) versehen ist, von denen die dem Abfluß aus dem Leckagehohlraum (11) dienende zweite Leckagehohlraumöffnung (3f) hinsichtlich ihres Durchtrittsquerschnittes wenigstens so groß wie die erste (3e) ausgeführt ist, die für den Zufluß vorgesehen ist.

6. Sitzreinigungsfähiges aseptisches Doppeldichtventil mit Leckkontrolle nach Anspruch 5, **dadurch gekennzeichnet,**
**daß** jede der Leckagehohlraumöffnungen (3e, 3f) über ein zugeordnetes Absperrventil (V1; V2) steuerbar ist, daß das erste Absperrventil (V1) die Zufuhr von Fluiden von außerhalb des Doppeldichtventils in den Leckagehohlraum (11) und daß das zweite Absperrventil (V2) die Abfuhr von Fluiden aus dem Leckagehohlraum (11) in die Umgebung des Doppeldichtventils steuert.

7. Sitzreinigungsfähiges aseptisches Doppeldichtventil mit Leckkontrolle nach einem der Ansprüche 5 oder 6, **dadurch gekennzeichnet, daß** die Leckagehohlraumöffnungen (3e, 3f) zwangsläufig in Abhängigkeit von der Schaltoder Funktionsstellung des Doppeldichtventils ( Schließ-, Offen- oder Teiloffenstellungen; Reinigung und Desinfektion des Leckagehohlraums in der Schließstellung) gesteuert werden.

8. Sitzreinigungsfähiges aseptisches Doppeldichtventil mit Leckkontrolle nach Anspruch 7, **dadurch gekennzeichnet, daß** die Steuerlogik für die Absperrventile (V1, V2) entweder zentral in der Umgebung des Doppeldichtventils oder am Doppeldichtventil hinterlegt ist.

9. Sitzreinigungsfähiges aseptisches Doppeldichtventil mit Leckkontrolle nach einem der Ansprüche 1 bis 8, **dadurch gekennzeichnet, daß** die erste Abdichtungsstelle (5) durch eine schließgliedseitig angeordnete, mit der ersten Begrenzungsfläche (3c) zusammenwirkende diskrete erste Sitzdichtung (5a) und daß die zweite Abdichtungsstelle (6) durch eine schließgliedseitig angeordnete, mit der zweiten Begrenzungsfläche (3d) zusammenwirkende diskrete zweite Sitzdichtung (6a) realisiert sind.

10. Sitzreinigungsfähiges aseptisches Doppeldichtventil mit Leckkontrolle nach einem der Ansprüche 1 bis 9, **dadurch gekennzeichnet, daß** die Verschlußteile (4a, 4b) durchmessergleich ausgeführt sind.

11. Sitzreinigungsfähiges aseptisches Doppeldichtventil mit Leckkontrolle nach einem der Ansprüche 3 bis 10, **dadurch gekennzeichnet, daß** in der durch den Teilhub (T1; T2) vollzogenen jeweiligen Teiloffenstellung des Doppeldichtventils an der dadurch freigelegten Abdichtungsstelle (5, 6) zwischen dem in Frage kommenden Verschlußteil (4a, 4b) und der zugeordneten Begrenzungsfläche (3c, 3d) jeweils ein Drosselspalt (DS) vorgesehen ist.

12. Sitzreinigungsfähiges aseptisches Doppeldichtventil mit Leckkontrolle nach einem der Ansprüche 1 bis 11, mit dem Antrieb (20), der in einem gemeinsamen Antriebsgehäuse (21) die beiden Einzelverstelleinrichtungen (20b, 20c) für die Teilhübe (T1; T2) und die zwischen diesen angeordnete Hauptverstelleinrichtung (20a) für den Vollhub (H) beherbergt, **dadurch gekennzeichnet,**
• **daß** die Hauptverstelleinrichtung (20a) eine aus einem ersten Hauptverstellkolben (24) und einem zweiten Hauptverstellkolben (25) bestehende, von der Ventilstange (7) durchdrungene erste Kolbenanordnung (24, 25) aufweist,
• die gegen eine Feder (23) die Ventilstange (7) um den Vollhub (H) verschiebt,
• wobei der erste Hauptverstellkolben (24) außenseits im ersten Antriebsgehäuse (21) und innenseits gegen den dort konzentrisch Aufnahme findenden zweiten Hauptverstellkolben (25) abgedichtet ist und letzterer innenseits mit der Ventilstange (7) unverschieblich verbunden ist, in Öffnungsrichtung des Doppeldichtventils in einer Mitnahmeverbindung mit dem ersten Hauptverstellkolben (24) steht und in entgegengesetzter Richtung in diesem verschieblich angeordnet ist,
• **daß** die oberhalb der Hauptverstelleinrichtung (20a) angeordnete erste Einzelverstelleinrichtung (20b) eine aus einem ersten Teilhubkolben (26) und einem zweiten Teilhubkolben (27) bestehende, von einer die Ventilstange (7) verlängemde Antriebsstange (30) durchdrungene zweite Kolbenanordnung (26, 27) aufweist, Teilhub (T1; T2) verschiebt,
• wobei der erste Teilhubkolben (26) außenseits im ersten Antriebsgehäuse (21) und innenseits gegen den dort konzentrisch Aufnahme findenden zweiten Teilhubkolben (27) abgedichtet ist, und
• **daß** die unterhalb der Hauptverstelleinrichtung (20a) angeordnete zweite Einzelverstelleinrichtung (20c) einen dritten Teilhubkolben (28) aufweist,
• der über den zweiten Hauptverstellkolben (25) und gegen die Feder (23) die Ventilstange (7) um den aufwärts gerichteten Teilhub (T2; T1) verschiebt.

13. Sitzreinigungsfähiges aseptisches Doppeldichtventil mit Leckkontrolle nach Anspruch 12, **dadurch gekennzeichnet, daß** der Vollhub (H) der Hauptverstelleinrichtung (20a), der Teilhub (T1; T2) der ersten Einzelverstelleinrichtung (20b) und der Teilhub (T2; T1) der zweiten Einzelverstelleinrichtung (20c) jeweils durch einen festen Anschlag (7e, 10g; 25, 28; 28,39) begrenzt sind.

14. Sitzreinigungsfähiges aseptisches Doppeldichtventil mit Leckkontrolle nach Anspruch 12 oder 13, **dadurch gekennzeichnet, daß** der zwischen der ersten Kolbenanordnung (24, 25) einerseits und der zweiten Kolbenanordnung (26, 27) andererseits innerhalb des ersten Antriebsgehäuses (21) gebildete Raum allseits abgedichtet und mit einem vierten Druckmittelanschluß (35) verbunden ist.

15. Sitzreinigungsfähiges aseptisches Doppeldichtventil mit Leckkontrolle nach einem der Ansprüche 12 bis 14, **dadurch gekennzeichnet, daß** der jeweils von der Feder (23) beaufschlagte erste Hauptverstellkolben (24) und erste Teilhubkolben (26) jeweils weitestgehend drehmomentfrei verschieblich auf der Ventilstange (7) mittelbar gelagert sind.

16. Sitzreinigungsfähiges aseptisches Doppeldichtventil mit Leckkontrolle nach einem der Ansprüche 12 bis 15, **dadurch gekennzeichnet, daß** die Ventil- (7) und die Antriebsstange (30) miteinander verschraubt und daß diese Verschraubung mittels einer zwischen beiden in der Längsachse angeordneten Schraube (32), die über eine in der Antriebsstange (30) angeordnete Druckmittelbohrung (30a) von außerhalb des Doppelsitzventils zugänglich ist, in Zugrichtung gegeneinander verspannt sind.

17. Sitzreinigungsfähiges aseptisches Doppeldichtventil mit Leckkontrolle nach Anspruch 16, **dadurch gekennzeichnet, daß** die Schraube (32) eine als Drossel ausgelegte Durchgangsbohrung (32a) aufweist, die die Druckmittelbohrung (30a) mit der Ventilstangenbohrung (7a) verbindet.

18. Sitzreinigungsfähiges aseptisches Doppeldichtventil mit Leckkontrolle nach einem der Ansprüche 1 bis 17, **dadurch gekennzeichnet, daß** Paarungsstellen, an denen Edelstahlteile eine Relativbewegung zueinander ausführen, ein Gleitlager (18.1, 18.2, 18.3, 18.4) aufweisen, daß kritische Werkstoffpaarungen durch die Kombination von Edelstahl mit Aluminium vermieden werden und daß die zylindrischen Begrenzungsflächen (3c, 3d) oberflächengehärtet ausgeführt sind.

## Claims

1. Aseptic leakage-controlled double-sealing valve with seat cleaning function comprising a translatory slidable closure member (4), which controls a connecting aperture (3a) connecting a first (1) with a second housing part (2) of a valve housing (V), a drive (20) comprising a main adjustment unit (20a) for a full lift (H) (open position) and two single adjustment units (20b, 20c) for partial lifts (T1; T2) (partially open position) of the closure member (4), said closure member (4) on the circumference, viewed in the shifting direction, forming two axially spaced sealing points (5, 6) with cylindrical boundaries (3c, 3d) communicating on the valve housing side and forming the edge of the connecting aperture (3a), which are each equipped with a seat seal (5a, 6a) effective in radial direction, a recess (3b, 4c) provided in the area between the sealing points (5, 6), which encloses this area in annular manner and forms a leakage cavity (11) connected with the surrounding of the double-sealing valve through at least one controllable connecting path provided on the valve housing side, and a bellows (8), bridging, without gap, a passage (9a) of a rod (7) joining the closure member (4) with the drive (20) in the area of this passage (9a),
**characterised in that**
• a first annular recess (4c) extending circumferentially is provided in the closure member (4) between the sealing points (5, 6), which forms a first (4a) and a second closing part (4b) there,
• a second annular recess (3b) extending circumferentially is provided on the housing side between the cylindrical boundaries (3c, 3d) of the connecting aperture (3a),
• the two recesses (3b, 4c) approximately communicate with each other in the closed position of the double-sealing valve,
• and that the closure member (4) in the open position of the double-sealing valve is displaced by the full lift (H) such that one of the two cylindrical boundaries (3c, 3d) defines with the first recess (4c) and, in dependence thereof, one of the two closing parts (4a, 4b) defines with the second recess (3b) the required cross-section of aperture of the double-sealing valve.

2. Aseptic leakage-controlled double-sealing valve with seat cleaning function according to claim 1, **characterised in that** the drive (20) is arranged with respect to the mounting position of the double-sealing valve above the valve housing (V), and that the closure member (4) is displaced in its open position towards the drive (20).

3. Aseptic leakage-controlled double-sealing valve with seat cleaning function according to claim 1 or 2, **characterised in that**
for the purpose of seat cleaning
• of the first sealing point (5) formed between the first closing part (4a) and the associated first cylindrical boundary (3c), the closure member (4) is displaced by the partial lift (T1) and
• of the second sealing point (6) formed between the second closing part (4b) and the associated second cylindrical boundary (3d), the closure member (4)is displaced by the opposing partial lift (T2).

4. Aseptic leakage-controlled double-sealing valve with seat cleaning function according to claim 3, **characterised in that** the partial lifts (T1, T2) are oriented towards each other.

5. Aseptic leakage-controlled double-sealing valve with seat cleaning function according one of the claims 1 to 4, **characterised in that** the leakage cavity (11) is provided with two leakage cavity apertures (3e, 3f) arranged on the valve housing side, wherein the second leakage cavity aperture (3f) serving for the discharge from the leakage cavity (11) is designed regarding its cross-sectional area of aperture at least as large as the first one (3e), which is provided for the inflow.

6. Aseptic leakage-controlled double-sealing valve with seat cleaning function according to claim 5, **characterised in that**
each of the leakage cavity apertures (3e, 3f) is controllable through an associated shutoff valve (V1), that the first shutoff valve (V1) controls the inflow of fluids from the outside of the double-sealing valve into the leakage cavity (11), and that the second shutoff valve (V2) controls the discharge of fluids from the leakage cavity (11) into the surrounding of the double-sealing valve.

7. Aseptic leakage-controlled double-sealing valve with seat cleaning function according to one of the claims 5 to 6, **characterised in that** the leakage cavity apertures (3e, 3f) are forcibly controlled in dependence on the switching or operational position of the double-sealing valve (closed, open, partially open positions, cleaning and disinfection of the leakage cavity in the closed position).

8. Aseptic leakage-controlled double-sealing valve with seat cleaning function according to claim 7, **characterised in that** the control logic for the shutoff valves (V1, V2) is deposited either centrally in the surrounding of the double-sealing valve or at the double-sealing valve.

9. Aseptic leakage-controlled double-sealing valve with seat cleaning function according to one of the claims 1 to 8, **characterised in that** the first sealing point (5) is implemented by a discrete first seat seal (5a) arranged on the side of the closure member and co-operating with the first boundary (3c), and that the second sealing point (6) is implemented by a discrete second seat seal (6a) arranged on the side of the closure member and co-operating with the second boundary (3d).

10. Aseptic leakage-controlled double-sealing valve with seat cleaning function according to one of the claims 1 to 9, **characterised in that** the closing parts (4a, 4b) are designed with equal cross-sections.

11. Aseptic leakage-controlled double-sealing valve with seat cleaning function according to one of the claims 3 to 10, **characterised in that** a flow-restrictor gap (DS) is provided in the respective partially open position of the double-sealing valve implemented by the partial lift (T1; T2) at the sealing point (5, 6) exposed thereby between the possible closing part (4a, 4b) and the associated boundary (3c, 3d).

12. Aseptic leakage-controlled double-sealing valve with seat cleaning function according to one of the claims 1 to 11, comprising a drive (20), which accommodates the two single adjustment units (20b, 20c) for the partial lifts (T1; T2) and the main adjustment unit (20a) for the full lift (H) in a common drive housing, **characterised in that**
• the main adjustment unit (20a) comprises a piston assembly (24, 25) consisting of a first main adjustment piston (24) and a second main adjustment piston (25) and penetrated by the valve rod (7),
• which displaces the valve (7) against a spring (23) by the full lift (H),
• wherein the first main adjustment piston (24) is sealed on the outside in the first drive housing (21) and on the inside against the second main adjustment piston (25) concentrically housed therein, and that the latter is connected stably with the valve rod (7) on the inside, is in the opening direction of the double-sealing valve in an entraining connection with the first main adjustment piston (24) and is arranged displaceable in the opposite direction therein,
• the first single adjustment unit (20b) arranged above the main adjustment unit (20a) comprises a second piston assembly (26, 27) consisting of a first partial lifting piston (26) and a second partial lifting piston (27) penetrated by a drive rod (30) extended by the valve rod (7),
• which displaces the valve rod (7) against the spring (23) by the downward directed partial lift (T1; T2),
• wherein the first partial. lifting piston (26) is sealed on the outside in the first drive housing (21) and on the inside against the second partial lifting piston (27) concentrically received there, and
• the second single adjustment unit (20c) arranged below the main adjustment unit (20a) comprises a third partial lifting piston (28),
• which displaces the valve rod (7) by the upward directed partial lift (T2; T1) through the second main adjustment piston (25) and against the spring (23) of the valve rod (7).

13. Aseptic leakage-controlled double-sealing valve with seat cleaning function according to claim 12, **characterised in that** the full lift (H) of the main adjustment unit (20a), the partial lift (T1; T2) of the first single adjustment unit (20b) and the partial lift (T2; T1) of the second individual adjustment unit (20c) are each restricted by a fixed stop (7e, 10g; 25, 28; 28, 39).

14. Aseptic leakage-controlled double-sealing valve with seat cleaning function according to claim 12 or 13, **characterised in that** the space formed within the first drive housing (21) between the first piston assembly (24, 25) on the one side and the second piston assembly (26, 27) on the other side is sealed to all sides and is connected with a fourth pressure medium connection (35).

15. Aseptic leakage-controlled double-sealing valve with seat cleaning function according to one of the claims 12 to 14, **characterised in that** each of the first main adjustment piston (24) and the first partial lifting piston (26) acted upon by the spring (23) are adjustably directly supported on the valve rod (7) substantially free of torque.

16. Aseptic leakage-controlled double-sealing valve with seat cleaning function according to one of the claims 12 to 15, **characterised in that** the valve rod (7) and the drive rod (30) are bolted together and braced against each other in the tensioning direction, and that this bolted joint is implemented by means of a screw (32) arranged between them in the longitudinal axis, which is accessible from the outside of the double-seat valve through a pressure medium bore (30a) arranged in the drive rod (30).

17. Aseptic leakage-controlled double-sealing valve with seat cleaning function according to claim 16, **characterised in that** the screw (32) comprises a through-hole (32a) designed as a throttle, which connects the pressure medium bore (30a) with the valve rod bore (7a).

18. Aseptic leakage-controlled double-sealing valve with seat cleaning function according to one of the claims 1 to 17, **characterised in that** mating points, where stainless steel parts move relatively to each other, comprise a journal bearing (18.1, 18.2, 18.3, 18.4), that critical material pairs are avoided by the combination of stainless steel with aluminium and that the cylindrical boundaries (3c, 3d) are designed with hardened surfaces.

## Revendications

1. Soupape à double étanchéité aseptique à siège nettoyable avec contrôle des fuites, avec un élément de fermeture (4) mobile en translation, qui commande une ouverture de liaison (3a) reliant l'une à l'autre une première partie de logement (1) à une seconde partie de logement (2) d'un logement de soupape (V), avec un entraînement (20), qui comprend un dispositif de réglage principal (20a) pour un levage complet (H) (position ouverte) et deux dispositifs de réglage individuel (20b, 20c) pour les levages partiels (T1 ; T2) (positions partiellement ouvertes) de l'élément de fermeture (4), avec l'élément de fermeture (4), qui forme côté périphérie, vu dans la direction du déplacement, respectivement avec des surfaces de délimitation cylindriques (3c, 3d) correspondantes côté logement de soupape, bordant l'ouverture de liaison (3a), deux points d'étanchéité (5, 6) écartés dans le sens axial, qui sont équipés respectivement d'un joint de siège (5a, 6a) agissant dans une direction radiale, avec un évidement (3b, 4c) prévu dans la zone entre les points d'étanchéité (5, 6), lequel évidement entoure annulairement cette zone et forme une cavité de fuites (11), qui est reliée par l'intermédiaire d'au moins un trajet de liaison commandable, réalisé côté logement de soupape, au voisinage de la soupape à double étanchéité, et avec un soufflet (B) qui chevauche sans fente un passage (9a) d'une tige (7) reliant l'élément de fermeture (4) à l'entraînement (20) dans la zone de ce passage (9a), **caractérisée en ce que**
- il est prévu dans l'élément de fermeture (4) entre les points d'étanchéité (5, 6) un premier évidement circulaire en forme d'anneau (4c), qui forme à cet endroit une première (4a) et une seconde partie de fermeture (4b),
- il est prévu, côté logement, entre les zones de délimitation cylindriques (3c, 3d) de l'ouverture de liaison (3a), un second évidement circulaire en forme d'anneau (3b),
- les deux évidements (3b, 4c) correspondent approximativement l'un à l'autre dans la position fermée de la soupape à double étanchéité,
- et dans la position ouverte de la soupape à double étanchéité, l'élément de fermeture (4) est déplacé d'un levage complet (H), de telle sorte qu'une des deux surfaces de délimitation cylindriques (3c, 3d) avec le premier évidement (4c) et, en fonction de cela, une des deux parties de fermeture (4a, 4b) délimitent avec le second évidement (3b) respectivement la section de passage nécessaire de la soupape à double étanchéité.

2. Soupape à double étanchéité aseptique à siège nettoyable avec contrôle des fuites selon la revendication 1, **caractérisée en ce que** l'entraînement (20), par rapport à la position de montage de la soupape à double étanchéité, est disposé au-dessus du logement de soupape (V) et **en ce que** l'élément de fermeture (4) est déplacé dans sa position ouverte en direction de l'entraînement (20).

3. Soupape à double étanchéité aseptique à siège nettoyable avec contrôle des fuites selon la revendication 1 ou 2, **caractérisée en ce que**
afin de nettoyer le siège
- du premier point d'étanchéité (5), qui est formé entre la première partie de fermeture (4a) et la première surface de délimitation cylindrique (3c) associée, l'élément de fermeture (4) est déplacé d'un levage partiel (T1) et
- du second point d'étanchéité (6), qui est formé entre la seconde partie de fermeture (4b) et la seconde surface de délimitation cylindrique (3d) associée, l'élément de fermeture (4) est déplacé d'un levage partiel (T2) inverse.

4. Soupape à double étanchéité aseptique à siège nettoyable avec contrôle des fuites selon la revendication 3, **caractérisée en ce que** les levages partiels (T1, T2) sont orientés l'un par rapport à l'autre.

5. Soupape à double étanchéité aseptique à siège nettoyable avec contrôle des fuites selon une des revendications 1 à 4, **caractérisée en ce que** la cavité de fuites (11) est dotée de deux ouvertures de cavité de fuites (3e, 3f) disposées côté logement de soupape, ouvertures parmi lesquelles la seconde ouverture de cavité de fuites (3f) servant à l'évacuation depuis la cavité de fuites (11) présente une section de passage au moins aussi grande que celle de la première (3e), qui est prévue pour l'afflux.

6. Soupape à double étanchéité aseptique à siège nettoyable avec contrôle des fuites selon la revendication 5, **caractérisée en ce que**
chacune des ouvertures de cavité de fuites (3e, 3f) peut être commandée par l'intermédiaire d'une soupape d'arrêt (V1 ; V2) associée, **en ce que** la première soupape d'arrêt (V1) commande l'amenée de fluides depuis l'extérieur de la soupape à double étanchéité dans la cavité de fuites (11) et **en ce que** la seconde soupape d'arrêt (V2) commande l'évacuation des fluides depuis la cavité de fluides (11) au voisinage de la soupape à double étanchéité.

7. Soupape à double étanchéité aseptique à siège nettoyable avec contrôle des fuites selon une des revendications 5 et 6, **caractérisée en ce que** les ouvertures de cavité de fuites (3e, 3f) sont commandées obligatoirement en fonction de la position de commutation ou de fonctionnement de la soupape à double étanchéité (positions fermée, ouverte ou partiellement ouverte ; nettoyage et désinfection de la cavité de fuites dans la position fermée).

8. Soupape à double étanchéité aseptique à siège nettoyable avec contrôle des fuites selon la revendication 7, **caractérisée en ce que** la logique de commande pour les soupapes d'arrêt (V1, V2) est déposée soit de façon centrale au voisinage de la soupape à double étanchéité soit sur la soupape à double étanchéité.

9. Soupape à double étanchéité aseptique à siège nettoyable avec contrôle des fuites selon une des revendications 1 à 8, **caractérisée en ce que** le premier point d'étanchéité (5) est réalisé par un premier joint de siège (5a) discret disposé côté élément de fermeture, coopérant avec la première surface de délimitation (3c) et **en ce que** le second point d'étanchéité (6) est réalisé par un second joint de siège (6a) discret disposé côté élément de fermeture, coopérant avec la seconde surface de délimitation (3d).

10. Soupape à double étanchéité aseptique à siège nettoyable avec contrôle des fuites selon une des revendications 1 à 9, **caractérisée en ce que** les parties de fermeture (4a, 4b) sont réalisées avec le même diamètre.

11. Soupape à double étanchéité aseptique à siège nettoyable avec contrôle des fuites selon une des revendications 3 à 10, **caractérisée en ce qu'**il est prévu respectivement une fente d'étranglement (DS), dans la position partiellement ouverte respective de la soupape à double étanchéité exécutée par le levage partiel (T1 ; T2), au niveau du point d'étanchéité (5, 6) de ce fait libéré, entre la partie de fermeture (4a, 4b) en question et la surface de délimitation (3c, 3c) associée.

12. Soupape à double étanchéité aseptique à siège nettoyable avec contrôle des fuites selon une des revendications 1 à 11, avec l'entraînement.(20), qui loge dans un logement d'entraînement (21) commun les deux dispositifs de réglage individuel (20b, 20c) pour les levages partiels (T1 ; T2) et le dispositif de réglage principal (20a) disposé entre ceux-ci pour le levage complet (H), **caractérisée**
- **en ce que** le dispositif de réglage principal (20a) comprend un premier agencement de pistons (24, 25) constitué d'un premier piston de réglage principal (24) et d'un second piston de réglage principal (25) et traversé par la tige de soupape (7),
- **en ce que** ledit agencement déplace la tige de soupape (7) à l'encontre d'un ressort (23) d'un levage complet (H),
- le premier piston de réglage principal (24) étant étanchéifié côté extérieur dans le premier logement d'entraînement (21) et côté intérieur contre le second piston de réglage principal (25) reçu ici de manière concentrique et ce dernier est relié côté intérieur à la tige de soupape (7) de manière non mobile, est en liaison d'entraînement, dans la direction d'ouverture de la soupape à double étanchéité, avec le premier piston de réglage principal (24) et est disposé de façon mobile dans celui-ci dans la direction opposée,
- **en ce que** le premier dispositif de réglage individuel (20b) disposé au-dessus du dispositif de réglage principal (20a) comprend un second agencement de pistons (26, 27) constitué d'un premier piston de levage partiel (26) et d'un deuxième piston de levage partiel (27) et traversé par une tige d'entraînement (30) prolongeant la tige de soupape (7),
- lequel agencement déplace la tige de soupape (7) à l'encontre du ressort (23) d'un levage partiel (T1 ; T2) orienté vers le bas,
- le premier piston de levage partiel (26) étant étanchéifié côté extérieur dans le premier logement d'entraînement (21) et côté intérieur contre le deuxième piston de levage partiel (27) reçu à cet endroit de manière concentrique, et
- **en ce que** le second dispositif de réglage individuel (20c) disposé au-dessous du dispositif de réglage principal (20a) comprend un troisième piston de levage partiel (28),
- qui déplace, par l'intermédiaire du second piston de réglage principal (25) et à l'encontre du ressort (23), la tige de soupape (7) d'un levage partiel (T2 ; T1) orienté vers le haut.

13. Soupape à double étanchéité aseptique à siège nettoyable avec contrôle des fuites selon la revendication 12, **caractérisée en ce que** le levage complet (H) du dispositif de réglage principal (20a), le levage partiel (T1 ; T2) du premier dispositif de réglage individuel (20b) et le levage partiel (T2 ; T1) du second dispositif de réglage individuel (20c) sont délimités respectivement par une première butée fixe (7e, 10g ; 25, 28 ; 28, 39).

14. Soupape à double étanchéité aseptique à siège nettoyable avec contrôle des fuites selon la revendication 12 ou 13, **caractérisée en ce que** l'espace formé entre le premier agencement de pistons (24, 25) d'une part et le second agencement de pistons (26, 27) d'autre part à l'intérieur du premier logement d'entraînement (21) est étanchéifié sur tous les côtés et est relié à un quatrième raccordement de pression (35).

15. Soupape à double étanchéité aseptique à siège nettoyable avec contrôle des fuites selon une des revendications 12 à 14, **caractérisée en ce que** le premier piston de réglage principal (24) sollicité respectivement par le ressort (23) et le premier piston de levage partiel (26) sont logés indirectement sur la tige de piston (7) en étant respectivement mobiles en grande partie sans couple de rotation.

16. Soupape à double étanchéité aseptique à siège nettoyable avec contrôle des fuites selon une des revendications 12 à 15, **caractérisée.en ce que** la tige de soupape (7) et la tige d'entraînement (30) sont vissées l'une à l'autre et **en ce que** ce raccord à vis est serré réciproquement dans la direction de traction, au moyen d'une vis (32) disposée entre les deux dans l'axe longitudinal, laquelle vis est accessible depuis l'extérieur de la soupape à double étanchéité par l'intermédiaire d'un alésage de pression (30a) disposé dans la tige d'entraînement (30).

17. Soupape à double étanchéité aseptique à siège nettoyable avec contrôle des fuites selon la revendication 16, **caractérisée en ce que** la vis (32) comprend un alésage de passage (32a) dimensionné comme un étrangleur, lequel alésage relie l'alésage de pression (30a) à l'alésage de tige de soupape (7a).

18. Soupape à double étanchéité aseptique à siège nettoyable avec contrôle des fuites selon une des revendications 1 à 17, **caractérisée en ce que** des points d'appariement, au niveau desquels des pièces en acier spécial réalisent un déplacement relatif les unes par rapport aux autres, comprennent un palier lisse (18.1, 18.2, 18.3, 18.4), **en ce que** des appariements de matériau critiques sont évités par la combinaison de l'acier spécial et de l'aluminium et **en ce que** les surfaces de délimitation cylindriques (3c, 3d) sont réalisées en étant soumises à la trempe superficielle.
